# EUROPEAN PATENT SPECIFICATION

(11) **EP 3 909 375 B1**
(45) Date of publication and mention of the grant of the patent: **23.04.2025**
(21) Application number: 20703609.6
(22) Date of filing: 07.01.2020
(51) Int. Cl.: H04W 16/14, H04W 74/0816, H04L 5/00, H04W 74/0833

(54) **HANDLING OF CHANNEL ACCESS PROBLEMS**
HANDHABUNG VON KANALZUGRIFFSPROBLEMEN
GESTION DE PROBLÈMES D'ACCÈS À UN CANAL

(30) Priority: 07.01.2019 US 201962789473 P; 06.01.2020 US 202016735504
(43) Date of publication of application: 17.11.2021
(73) Proprietor: QUALCOMM Incorporated, San Diego, CA 92121-1714 (US)
(72) Inventor: OZTURK, Ozcan, San Diego, California 92121-1714 (US); DAMNJANOVIC, Aleksandar, San Diego, California 92121-1714 (US); RADULESCU, Andrei Dragos, San Diego, California 92121-1714 (US); ZHANG, Xiaoxia, San Diego, California 92121-1714 (US); LUO, Tao, San Diego, California 92121-1714 (US); SUN, Jing, San Diego, California 92121-1714 (US)
(74) Representative: Bardehle Pagenberg Partnerschaft mbB Patentanwälte Rechtsanwälte
(86) International application number: PCT/US2020/012555
(87) International publication number: WO 2020/146365

(56) References cited:
- US-A1- 2017 099 678
- US-A1- 2018 184 475
- US-A1- 2018 184 475
- 3GPP: "Technical Specification Group Radio Access Network; Study on NR-based Access to Unlicensed Spectrum; (Release 16)", 3 December 2018 (2018-12-03), XP051493992, Retrieved from the Internet <URL:http://www.3gpp.org/ftp/tsg%5Fran/TSG%5FRAN/TSGR%5F82/Docs/RP%2D182398%2Ezip> [retrieved on 20181203]
- 3GPP: "Technical Specification Group Radio Access Network; Study on NR-based Access to Unlicensed Spectrum; (Release 16)", 3 December 2018 (2018-12-03), XP051493992, Retrieved from the Internet <URL:http://www.3gpp.org/ftp/tsg%5Fran/TSG%5FRAN/TSGR%5F82/Docs/RP%2D182398%2Ezip> [retrieved on 20181203]

## Description

### BACKGROUND

### Technical Field

The present disclosure relates generally to communication systems, and more particularly, to wireless communication in an unlicensed spectrum.

### Introduction

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. 5G NR includes services associated with enhanced mobile broadband (eMBB), massive machine type communications (mMTC), and ultra reliable low latency communications (URLLC). Some aspects of 5G NR may be based on the 4G Long Term Evolution (LTE) standard.
There exists a need for further improvements in 5G NR technology. These improvements may also be applicable to other multi-access technologies and the telecommunication standards that employ these technologies.
US 2018/184475 A1 discloses an embodiment, wherein a first base station receives from a second base station, an application protocol message that comprises radio resource status information of one or more licensed assisted access (LAA) cells of the second base station. The radio resource status information comprises at least one listen before talk (LBT) parameter of one or more LBT processes associated with the second base station. The first base station decides to request the second base station to allocate radio resources for a bearer of a wireless device based on the at least one LBT parameter. The first base station transmits a second message indicating a request to add the second base station for dual connectivity of the wireless device. The first base station transmits to the wireless device configuration parameters of a cell group comprising the one or more LAA cells for communication with the second base station.
3GPP TR 38.889 V1.0.0 (3rd Generation Partnership Project; Technical Specification Group Radio Access Network; Study on NR-based Access to Unlicensed Spectrum; (Release 16)) addresses evaluation methodology and possible scenarios for NR based unlicensed deployments.
US 2017/0099678 A1 discloses a method in which a first base station receives a first message comprising one or more first parameters identifying one or more first subframes as a listen-before-talk (LBT) subframe. One or more second subframes are selected as an LBT subframe by the first base station employing the one or more first parameters. An LBT procedure is performed in a subframe in the one or more subframes. A burst is transmitted when the LBT procedure indicates a clear channel.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later. The invention is defined by the independent claims. Preferred embodiments are defined in the dependent claims.

In wireless communication between a base station and a User Equipment (UE) in an unlicensed spectrum, downlink and uplink transmissions may not occur due to listen before talk (LBT) procedure failures, for example, the base station or the UE may not get access to an unlicensed frequency channel. If the channel access problem occurs consistently, the system performance may be degraded.

In order to overcome the channel access problem and to prevent system performance degradation, the present application provides a solution in which the UE may send a report to the base station indicating a failure of an LBT procedure for an attempted transmission, and the base station may de-activate or change the cell for which the report applies or perform a handover (HO). Aspects presented herein improve communication reliability by enabling the base station and/or the UE to get access to an unlicensed frequency channel in a shorter time. Aspects presented herein further improve communication data rate, capacity and spectral efficiency.

In an aspect of the disclosure, a method, a computer-readable medium, and an apparatus are provided. The apparatus may be a wireless device, for example, a UE. The apparatus may be configured to determine to send a transmission to a first base station on a first unlicensed frequency channel of an unlicensed frequency spectrum. The apparatus may be configured to determine, for one or more attempts of a listen before talk (LBT) protocol, whether each attempt is a failed attempt or a successful attempt. The apparatus may be configured to determine that the first unlicensed frequency channel is one of: unavailable based on the LBT protocol failing due to at least one of a number of failed attempts exceeding a first threshold number of failed attempts or a duration of failed attempts exceeding a first threshold duration, or available based on at least one attempt of the LBT protocol being successful for the transmission. The apparatus may be configured to send a report to the first base station indicating whether the first unlicensed frequency channel is unavailable or available through a unicast radio resource control (RRC) message or a medium access control (MAC) control element (CE).

In another aspect of the disclosure, a method, a computer-readable medium, and an apparatus are provided. The apparatus may be a wireless device, for example, a first base station. The apparatus may be configured to determine a failure of a listen before talk (LBT) protocol for a transmission from a user equipment (UE) to the first base station through an unlicensed frequency spectrum. The apparatus may be configured to determine the failure of the LBT protocol for the transmission from the UE by: receiving a report from the UE indicating the failure of the LBT protocol for the transmission from the UE through the unlicensed frequency spectrum; and determining the failure of the LBT protocol for the transmission from the UE based on the received report. The apparatus may be configured to perform, based on the determination of the failed LBT protocol for the transmission from the UE, one of changing a secondary cell at the first base station for the UE for communication through the unlicensed frequency spectrum or handing over the UE to a primary cell at a second base station for communication through the unlicensed frequency spectrum.

### BRIEF DESCRIPTION OF THE DRAWINGS

FIG. 1 is a diagram illustrating an example of a wireless communications system and an access network.
FIGs. 2A, 2B, 2C, and 2D are diagrams illustrating examples of a first 5G/NR frame, DL channels within a 5G/NR subframe, a second 5G/NR frame, and UL channels within a 5G/NR subframe, respectively.
FIG. 3 is a diagram illustrating an example of a base station and a UE in an access network.
FIG. 4 is a diagram illustrating a solution to address channel access problem.
FIG. 5 is a diagram illustrating an example of a solution to address channel access problem.
FIG. 6 is a flowchart of a method of wireless communication.
FIG. 7 is a conceptual data flow diagram illustrating the data flow between different means/components in an example apparatus.
FIG. 8 is a diagram illustrating an example of a hardware implementation for an apparatus employing a processing system.
FIG. 9 is a flowchart of a method of wireless communication.
FIG. 10 is a conceptual data flow diagram illustrating the data flow between different means/components in an example apparatus.
FIG. 11 is a diagram illustrating an example of a hardware implementation for an apparatus employing a processing system.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

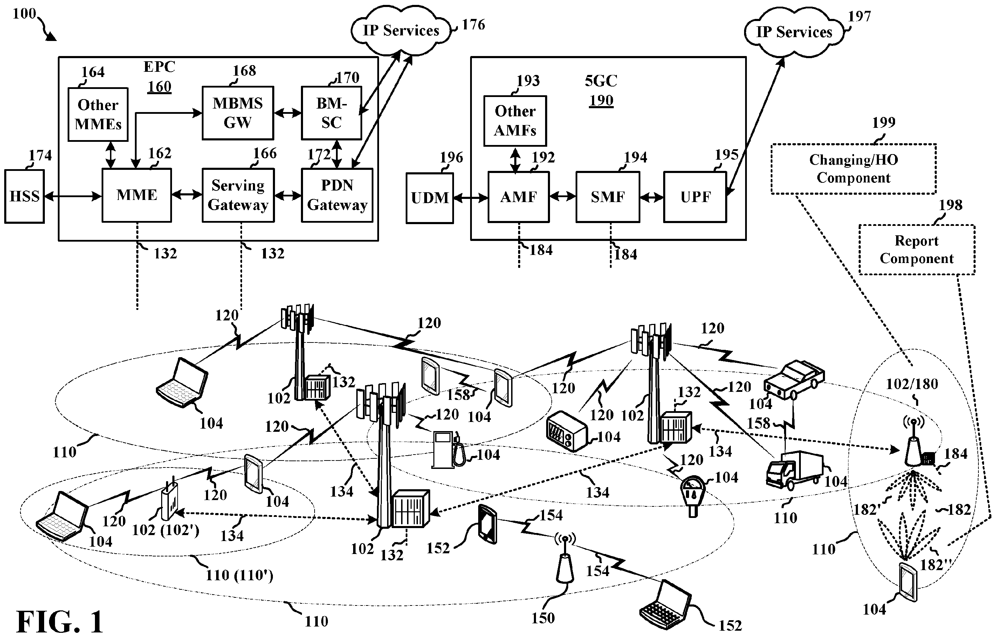

FIG. 1 is a diagram illustrating an example of a wireless communications system and an access network 100. The wireless communications system (also referred to as a wireless wide area network (WWAN)) includes base stations 102, UEs 104, an Evolved Packet Core (EPC) 160, and a 5G Core (5GC) 190. The base stations 102 may include macro cells (high power cellular base station) and/or small cells (low power cellular base station). The macro cells include base stations. The small cells include femtocells, picocells, and microcells.

The base stations 102 configured for 4G LTE (collectively referred to as Evolved Universal Mobile Telecommunications System (UMTS) Terrestrial Radio Access Network (E-UTRAN)) may interface with the EPC 160 through backhaul links 132 (e.g., S1 interface). The base stations 102 configured for 5G NR (collectively referred to as Next Generation RAN (NG-RAN)) may interface with 5GC 190 through backhaul links 184. In addition to other functions, the base stations 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. The base stations 102 may communicate directly or indirectly (e.g., through the EPC 160 or 5GC 190) with each other over backhaul links 134 (e.g., X2 interface). The backhaul links 134 may be wired or wireless.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macro cells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-input and multiple-output (MIMO) antenna technology, including spatial multiplexing, beamforming, and/or transmit diversity. The communication links may be through one or more carriers. The base stations 102 / UEs 104 may use spectrum up to *Y* MHz (e.g., 5, 10, 15, 20, 100, 400, etc. MHz) bandwidth per carrier allocated in a carrier aggregation of up to a total of *Yx* MHz (*x* component carriers) used for transmission in each direction. The carriers may or may not be adjacent to each other. Allocation of carriers may be asymmetric with respect to DL and UL (e.g., more or less carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the DL/UL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, FlashLinQ, WiMedia, Bluetooth, ZigBee, Wi-Fi based on the IEEE 802.11 standard, LTE, or NR.

The wireless communications system may further include a Wi-Fi access point (AP) 150 in communication with Wi-Fi stations (STAs) 152 via communication links 154 in a 5 GHz unlicensed frequency spectrum. When communicating in an unlicensed frequency spectrum, the STAs 152 / AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same 5 GHz unlicensed frequency spectrum as used by the Wi-Fi AP 150. The small cell 102', employing NR in an unlicensed frequency spectrum, may boost coverage to and/or increase capacity of the access network.

A base station 102, whether a small cell 102' or a large cell (e.g., macro base station), may include an eNB, gNodeB (gNB), or other type of base station. Some base stations, such as gNB 180 may operate in a traditional sub 6 GHz spectrum, in millimeter wave (mmW) frequencies, and/or near mmW frequencies in communication with the UE 104. When the gNB 180 operates in mmW or near mmW frequencies, the gNB 180 may be referred to as an mmW base station. Extremely high frequency (EHF) is part of the RF in the electromagnetic spectrum. EHF has a range of 30 GHz to 300 GHz and a wavelength between 1 millimeter and 10 millimeters. Radio waves in the band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW / near mmW radio frequency band (e.g., 3 GHz - 300 GHz) has extremely high path loss and a short range. The mmW base station 180 may utilize beamforming 182 with the UE 104 to compensate for the extremely high path loss and short range.

The base station 180 may transmit a beamformed signal to the UE 104 in one or more transmit directions 182'. The UE 104 may receive the beamformed signal from the base station 180 in one or more receive directions 182". The UE 104 may also transmit a beamformed signal to the base station 180 in one or more transmit directions. The base station 180 may receive the beamformed signal from the UE 104 in one or more receive directions. The base station 180 / UE 104 may perform beam training to determine the best receive and transmit directions for each of the base station 180 / UE 104. The transmit and receive directions for the base station 180 may or may not be the same. The transmit and receive directions for the UE 104 may or may not be the same.

The EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The 5GC 190 may include a Access and Mobility Management Function (AMF) 192, other AMFs 193, a Session Management Function (SMF) 194, and a User Plane Function (UPF) 195. The AMF 192 may be in communication with a Unified Data Management (UDM) 196. The AMF 192 is the control node that processes the signaling between the UEs 104 and the 5GC 190. Generally, the AMF 192 provides QoS flow and session management. All user Internet protocol (IP) packets are transferred through the UPF 195. The UPF 195 provides UE IP address allocation as well as other functions. The UPF 195 is connected to the IP Services 197. The IP Services 197 may include the Internet, an intranet, an IP Multimedia Subsystem (IMS), a PS Streaming Service, and/or other IP services.

The base station may also be referred to as a gNB, Node B, evolved Node B (eNB), an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or 5GC 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

Referring again to FIG. 1, in certain aspects, the UE 104 may be configured to determine to send a transmission to a first base station 102/180 on a first unlicensed frequency channel of an unlicensed frequency spectrum, and to determine, for one or more attempts of an LBT protocol, whether each attempt is a failed attempt or a successful attempt for the transmission to the first base station 102/180. The UE 104 may be configured to determine that the first unlicensed frequency channel is one of unavailable based on the LBT protocol failing due to a number of failed attempts exceeding a first threshold number of failed attempts or a duration of failed attempts exceeding a first threshold duration, or available based on the LBT protocol being successful for the transmission. The UE 104 comprises a report component 198 configured to send a report to the first base station indicating whether the first unlicensed frequency channel is unavailable or available through a unicast radio resource control (RRC) message or a medium access control (MAC) control element (CE). In certain aspects, the first base station 102/180 may be configured to determine a failure of an LBT protocol for a transmission from the UE 104 to the first base station 102/180 through an unlicensed frequency spectrum. For example, the first base station 102/180 may receive a report from the UE indicating the failure of the LBT protocol for the transmission from the UE through the unlicensed frequency spectrum. The first base station 102/180 may determine the failure of the LBT protocol for the transmission from the UE based on the received report. The first base station 102/180 comprises a changing/HO component 199 configured to perform, based on the determination of the failed LBT protocol for the transmission from the UE, one of changing a secondary cell at the base station for the UE for communication through the unlicensed frequency spectrum or handing over the UE to a primary cell at a second base station for communication through the unlicensed frequency spectrum.

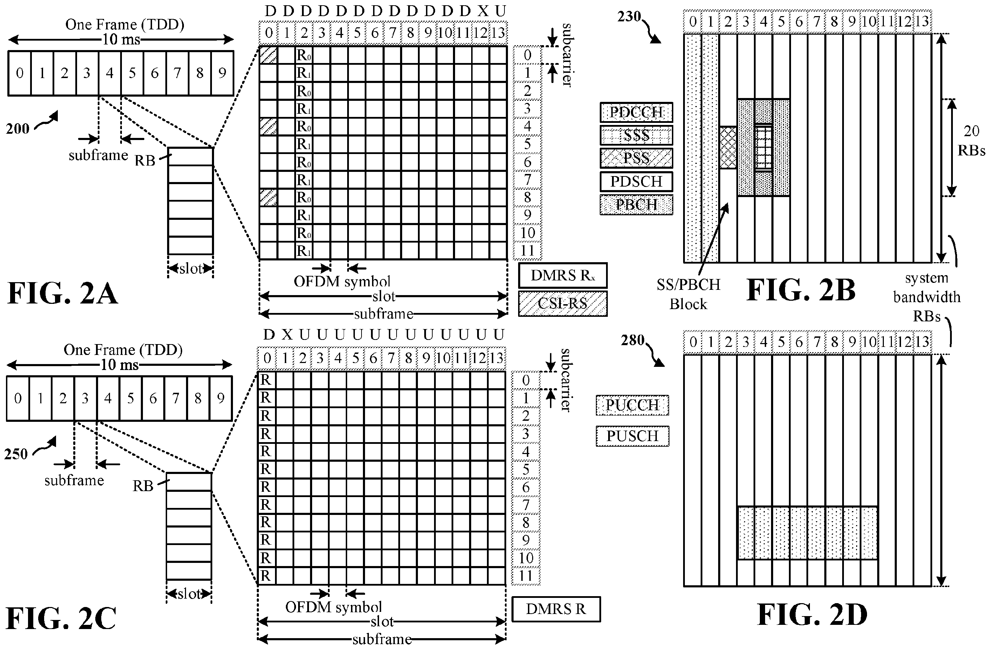

FIG. 2A is a diagram 200 illustrating an example of a first subframe within a 5G/NR frame structure. FIG. 2B is a diagram 230 illustrating an example of DL channels within a 5G/NR subframe. FIG. 2C is a diagram 250 illustrating an example of a second subframe within a 5G/NR frame structure. FIG. 2D is a diagram 280 illustrating an example of UL channels within a 5G/NR subframe. The 5G/NR frame structure may be FDD in which for a particular set of subcarriers (carrier system bandwidth), subframes within the set of subcarriers are dedicated for either DL or UL, or may be TDD in which for a particular set of subcarriers (carrier system bandwidth), subframes within the set of subcarriers are dedicated for both DL and UL. In the examples provided by FIGs. 2A, 2C, the 5G/NR frame structure is assumed to be TDD, with subframe 4 being configured with slot format 28 (with mostly DL), where D is DL, U is UL, and X is flexible for use between DL/UL, and subframe 3 being configured with slot format 34 (with mostly UL). While subframes 3, 4 are shown with slot formats 34, 28, respectively, any particular subframe may be configured with any of the various available slot formats 0-61. Slot formats 0, 1 are all DL, UL, respectively. Other slot formats 2-61 include a mix of DL, UL, and flexible symbols. UEs are configured with the slot format (dynamically through DL control information (DCI), or semi-statically/statically through radio resource control (RRC) signaling) through a received slot format indicator (SFI). Note that the description *infra* applies also to a 5G/NR frame structure that is TDD.

Other wireless communication technologies may have a different frame structure and/or different channels. A frame (10 ms) may be divided into 10 equally sized subframes (1 ms). Each subframe may include one or more time slots. Subframes may also include mini-slots, which may include 7, 4, or 2 symbols. Each slot may include 7 or 14 symbols, depending on the slot configuration. For slot configuration 0, each slot may include 14 symbols, and for slot configuration 1, each slot may include 7 symbols. The symbols on DL may be cyclic prefix (CP) OFDM (CP-OFDM) symbols. The symbols on UL may be CP-OFDM symbols (for high throughput scenarios) or discrete Fourier transform (DFT) spread OFDM (DFT-s-OFDM) symbols (also referred to as single carrier frequency-division multiple access (SC-FDMA) symbols) (for power limited scenarios; limited to a single stream transmission). The number of slots within a subframe is based on the slot configuration and the numerology. For slot configuration 0, different numerologies µ 0 to 5 allow for 1, 2, 4, 8, 16, and 32 slots, respectively, per subframe. For slot configuration 1, different numerologies 0 to 2 allow for 2, 4, and 8 slots, respectively, per subframe. Accordingly, for slot configuration 0 and numerology µ, there are 14 symbols/slot and 2^{µ} slots/subframe. The subcarrier spacing and symbol length/duration are a function of the numerology. The subcarrier spacing may be equal to 2*^{µ}* = 15 *kKz,* where *µ* is the numerology 0 to 5. As such, the numerology µ=0 has a subcarrier spacing of 15 kHz and the numerology µ=5 has a subcarrier spacing of 480 kHz. The symbol length/duration is inversely related to the subcarrier spacing. FIGs. 2A-2D provide an example of slot configuration 0 with 14 symbols per slot and numerology µ=0 with 1 slot per subframe. The subcarrier spacing is 15 kHz and symbol duration is approximately 66.7 *µ*s.

A resource grid may be used to represent the frame structure. Each time slot includes a resource block (RB) (also referred to as physical RBs (PRBs)) that extends 12 consecutive subcarriers. The resource grid is divided into multiple resource elements (REs). The number of bits carried by each RE depends on the modulation scheme.

As illustrated in FIG. 2A, some of the REs carry reference (pilot) signals (RS) for the UE. The RS may include demodulation RS (DM-RS) (indicated as Rₓ for one particular configuration, where 100x is the port number, but other DM-RS configurations are possible) and channel state information reference signals (CSI-RS) for channel estimation at the UE. The RS may also include beam measurement RS (BRS), beam refinement RS (BRRS), and phase tracking RS (PT-RS).

FIG. 2B illustrates an example of various DL channels within a subframe of a frame. The physical downlink control channel (PDCCH) carries DCI within one or more control channel elements (CCEs), each CCE including nine RE groups (REGs), each REG including four consecutive REs in an OFDM symbol. A primary synchronization signal (PSS) may be within symbol 2 of particular subframes of a frame. The PSS is used by a UE 104 to determine subframe/symbol timing and a physical layer identity. A secondary synchronization signal (SSS) may be within symbol 4 of particular subframes of a frame. The SSS is used by a UE to determine a physical layer cell identity group number and radio frame timing. Based on the physical layer identity and the physical layer cell identity group number, the UE can determine a physical cell identifier (PCI). Based on the PCI, the UE can determine the locations of the aforementioned DM-RS. The physical broadcast channel (PBCH), which carries a master information block (MIB), may be logically grouped with the PSS and SSS to form a synchronization signal (SS)/PBCH block. The MIB provides a number of RBs in the system bandwidth and a system frame number (SFN). The physical downlink shared channel (PDSCH) carries user data, broadcast system information not transmitted through the PBCH such as system information blocks (SIBs), and paging messages.

As illustrated in FIG. 2C, some of the REs carry DM-RS (indicated as R for one particular configuration, but other DM-RS configurations are possible) for channel estimation at the base station. The UE may transmit DM-RS for the physical uplink control channel (PUCCH) and DM-RS for the physical uplink shared channel (PUSCH). The PUSCH DM-RS may be transmitted in the first one or two symbols of the PUSCH. The PUCCH DM-RS may be transmitted in different configurations depending on whether short or long PUCCHs are transmitted and depending on the particular PUCCH format used. Although not shown, the UE may transmit sounding reference signals (SRS). The SRS may be used by a base station for channel quality estimation to enable frequency-dependent scheduling on the UL.

FIG. 2D illustrates an example of various UL channels within a subframe of a frame. The PUCCH may be located as indicated in one configuration. The PUCCH carries uplink control information (UCI), such as scheduling requests, a channel quality indicator (CQI), a precoding matrix indicator (PMI), a rank indicator (RI), and HARQ ACK/NACK feedback. The PUSCH carries data, and may additionally be used to carry a buffer status report (BSR), a power headroom report (PHR), and/or UCI.

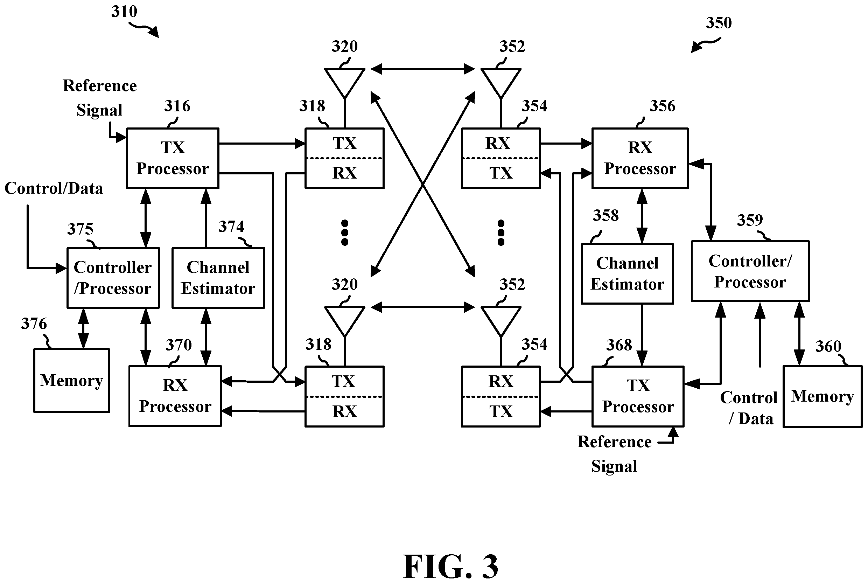

FIG. 3 is a block diagram of a base station 310 in communication with a UE 350 in an access network. In the DL, IP packets from the EPC 160 may be provided to a controller/processor 375. The controller/processor 375 implements layer 3 and layer 2 functionality. Layer 3 includes a radio resource control (RRC) layer, and layer 2 includes a service data adaptation protocol (SDAP) layer, a packet data convergence protocol (PDCP) layer, a radio link control (RLC) layer, and a medium access control (MAC) layer. The controller/processor 375 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 316 and the receive (RX) processor 370 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the UE 350. Each spatial stream may then be provided to a different antenna 320 via a separate transmitter 318TX. Each transmitter 318TX may modulate an RF carrier with a respective spatial stream for transmission.

At the UE 350, each receiver 354RX receives a signal through its respective antenna 352. Each receiver 354RX recovers information modulated onto an RF carrier and provides the information to the receive (RX) processor 356. The TX processor 368 and the RX processor 356 implement layer 1 functionality associated with various signal processing functions. The RX processor 356 may perform spatial processing on the information to recover any spatial streams destined for the UE 350. If multiple spatial streams are destined for the UE 350, they may be combined by the RX processor 356 into a single OFDM symbol stream. The RX processor 356 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 310. These soft decisions may be based on channel estimates computed by the channel estimator 358. The soft decisions are then decoded and deinterleaved to recover the data and control signals that were originally transmitted by the base station 310 on the physical channel. The data and control signals are then provided to the controller/processor 359, which implements layer 3 and layer 2 functionality.

The controller/processor 359 can be associated with a memory 360 that stores program codes and data. The memory 360 may be referred to as a computer-readable medium. In the UL, the controller/processor 359 provides demultiplexing between transport and logical channels, packet reassembly, deciphering, header decompression, and control signal processing to recover IP packets from the EPC 160. The controller/processor 359 is also responsible for error detection using an ACK and/or NACK protocol to support HARQ operations.

Similar to the functionality described in connection with the DL transmission by the base station 310, the controller/processor 359 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 358 from a reference signal or feedback transmitted by the base station 310 may be used by the TX processor 368 to select the appropriate coding and modulation schemes, and to facilitate spatial processing. The spatial streams generated by the TX processor 368 may be provided to different antenna 352 via separate transmitters 354TX. Each transmitter 354TX may modulate an RF carrier with a respective spatial stream for transmission.

The UL transmission is processed at the base station 310 in a manner similar to that described in connection with the receiver function at the UE 350. Each receiver 318RX receives a signal through its respective antenna 320. Each receiver 318RX recovers information modulated onto an RF carrier and provides the information to a RX processor 370.

The controller/processor 375 can be associated with a memory 376 that stores program codes and data. The memory 376 may be referred to as a computer-readable medium. In the UL, the controller/processor 375 provides demultiplexing between transport and logical channels, packet reassembly, deciphering, header decompression, control signal processing to recover IP packets from the UE 350. IP packets from the controller/processor 375 may be provided to the EPC 160. The controller/processor 375 is also responsible for error detection using an ACK and/or NACK protocol to support HARQ operations.

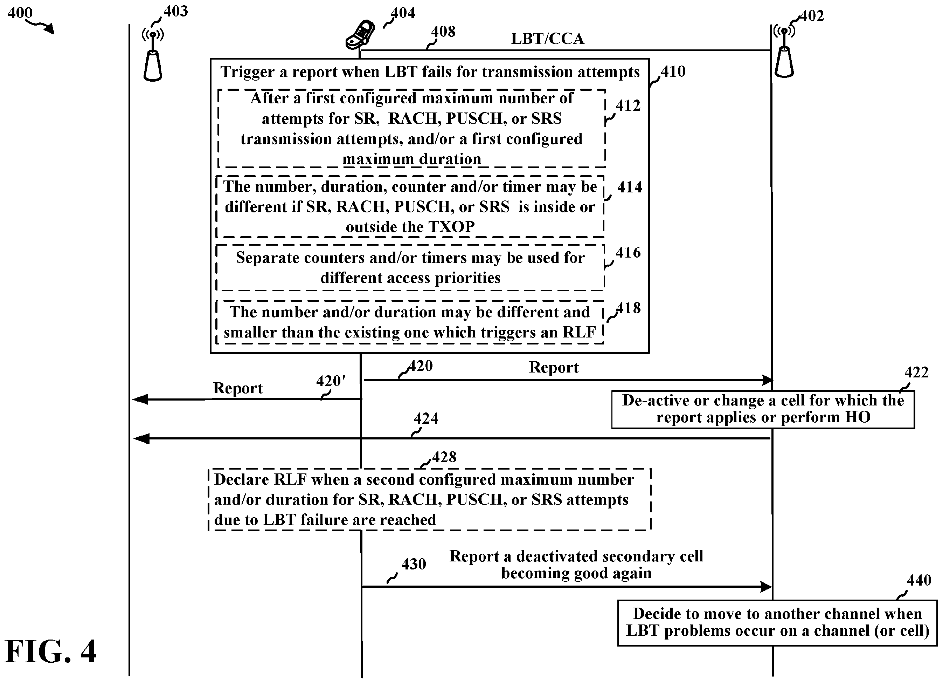

FIG. 4 is a diagram 400 illustrating a solution to address channel access problems. In wireless communication (e.g., 5G NR or LTE wireless communication) in an unlicensed spectrum, a channel access procedure, for example, an LBT procedure, may fail because other UEs or other base stations or other technologies may use an unlicensed channel in the unlicensed spectrum. Thus, downlink and uplink transmissions may not occur due to the LBT procedure failures, for example, the base station or the UE may not be able to get access to the channel. When the LBT procedure fails, the base station 402 or the UE 404 may not get access to the channel, for example, for a long time duration. The channel access problem may degrade system performance, and may further degrade communication data rate, capacity and spectral efficiency.

The present application disclosed herein provides a solution to overcome the channel access problem and to prevent system performance degradation. For uplink transmissions, in the LBT procedure, the UE 404 may be required to apply a clear channel assessment (CCA) check prior to transmission, as illustrated at 408. CCA may involve at least energy detection over a time duration with a certain threshold to determine if a channel is occupied or is clear. If the channel is occupied, random back-off within a contention window may apply. The UE 404 may have a contention window for a duration of time, and the UE 404 may listen to the channel for the duration of time. For example, the UE 404 may have a contention window of 5ms, and the UE 404 may listen to the channel for 5ms. If the channel is clear, the UE 404 may start transmitting.

When channel access failure happens, the UE 404 may report to the base station 402, as illustrated at 420. For example, when transmission attempts fail, the UE 404 may send a report to the base station 402, where the report shows that there is a problem on the unlicensed channel. The base station 402 may take actions, such as de-activating or changing a cell for which the report applies or performing HO, as illustrated at 422. In this way, the base station 402 and/or the UE 404 may get access to an unlicensed frequency channel in the unlicensed spectrum in a shorter time, and therefore, communication reliability may be improved. Further, communication data rate, capacity and spectral efficiency may also be improved.

For example, the base station 402 may configure the UE 404 with a first number of transmission attempts and/or a first duration. At 410, the UE 404 may trigger the report when the LBT procedure fails for the first number of transmission attempts. For example, the transmission attempts may include transmission attempts for scheduling request (SR), random access channel (RACH), PUSCH, or SRS. The transmission attempts may include other types of transmission attempts as well. For example, the UE 404 may trigger the report after the transmission attempts for SR, RACH, PUSCH, or SRS fail for a configured first maximum number of attempts or a configured first maximum duration, as illustrated at 412.

As an example, when a transmission attempt fails, a counter and/or timer may be triggered. The counter and/or timer may start counting or running. The counter may increment by 1 after each failed attempt, until reaching the first configured maximum number of attempts and/or a first configured maximum duration. For example, each failed attempt may be due to LBT procedure failure for a transmission. After a successful attempt, the UE 404 may determine that the first unlicensed frequency channel is available for the transmission, and the counter and/or timer may be reset.

At 414, for example, for a SR transmission, the first configured maximum number of attempts, the first configured maximum duration, the counter, and/or the timer may be different if SR is inside or outside a transmission opportunity (TXOP). TXOP refers to the amount of time a base station can send frames when the base station has won contention for the wireless medium. For example, TXOP may correspond to a transmission duration reserved by the base station after LBT being successful. When SR is inside the TXOP, the base station 402 has already contended for the channel. For the duration of TXOP, the base station 402 has already obtained access to the channel. Thus, when SR is inside the TXOP, the UE 404 may have an LBT procedure with a minimum duration. For example, when SR is inside the TXOP, the UE 404 may have the LBT with a contention window of 25 µs. When SR is outside the TXOP, the UE 404 has to contend for the channel, thus the UE 404 may have an LBT with a different duration, based on a contention window (e.g., 5 ms). Therefore, the UE 404 may have different first configured maximum numbers, first maximum durations, counters, and/or timers if SR is inside or outside the TXOP. Further, for RACH, PUSCH, or SRS transmission attempt, if the RACH, PUSCH, or SRS transmission attempt is inside or outside the TXOP, there may be different first configured maximum numbers, first maximum durations, counters, or timers as well.

In an aspect, the UE 404 may detect channel access failure when the UE 404 does not have data to transmit. The UE 404 may periodically perform the LBT protocol when no transmission is available to send. Such performance of the LBT protocol may be referred to as a virtual transmission attempt. The UE 404 may use virtual transmission attempts to determine the availability of the unlicensed frequency channel even when there are not sufficient actual uplink transmission attempts. The periodicity of the virtual transmission attempts may be based on virtual transmission attempts inside or outside a TXOP. For example, the UE 404 may perform a virtual transmission attempt when the TXOP starts or periodically within the TXOP. A separate periodicity may apply outside of the TXOP.

As another example, separate first configured maximum numbers, first configured maximum durations, counters, and/or timers may be used for different access priorities, as illustrated at 416. To provide differentiation to channel access priorities based on the type of traffic served, there may be different priority classes. For example, there may be four LBT priority classes, 1, 2, 3, or 4, with 1 being the highest priority class. Different LBT priority classes may have different contention window sizes (CWS). Each access priority may have a corresponding maximum and minimum CWS. For example, higher access priority may have a lower maximum CWS. The highest access priority may have the lowest maximum CWS. For example, the lowest maximum contention window size may be 25 µs. The UE 404 may track different priority classes differently. For example, each access priority may have a corresponding first configured maximum number, duration, counter, and/or timer. For example, the counters and/or timers for higher access priorities may also be reset when a counter and/or a timer for an access priority is reset.

As another example, the first configured maximum number of attempts and/or a first configured maximum duration may be different and smaller than a threshold which triggers a radio link failure (RLF), as illustrated at 418.

Once the report has been triggered, the UE 404 may transmit the report to the base station 402. The base station 402 may configure the first maximum number of attempts and/or the first maximum duration in such a way that the UE 404 may still be able to send the report, for example, as an RRC message. The UE 404 may also send the report as an MAC control element (CE).

The report may include any information about the LBT failure. For example, the report may include when the LBT failure happens, why the LBT failure happens, which frequency/channel the LBT failure happens, what the attempt type is, channel quality, or measurement for other cells, etc. For example, the report may include the channel (cell), attempt type (SR, RACH, PUSCH, SRS), LBT type (one shot, Cat2, Cat4), the number of attempts, or duration of the failure event. For example, the report may also include a reference signal received power (RSRP), a reference signal received quality (RSRQ), a signal to interference plus noise ratio (SINR), a signal to noise ratio (SNR), a reference signal strength indication (RSSI), or channel occupancy of all cells and frequencies configured by measurement objects. As an example, the report may further include a weighted sum of the number of failed attempts and the duration of failed attempts.

In an aspect, a HO may happen after the report is triggered. When a HO happens after the trigger, the UE 404 may send the report to a target base station 403 in addition to the base station 402, as illustrated at 420'. Because the same problem causing the LBT failure may still persist, the UE 404 may send the same report to the target base station 403 to inform the target base station 403 of the problem.

At 422, when the base station 402 receives the report, the base station 402 may de-activate or change a cell for which the report applies or perform a HO. The base station 402 may have a primary cell and several secondary cells. For example, each cell may be 20 MHZ. The base station 402 may have multiple 20 MHz cells, one being the primary cell, and the others being the secondary cells.

As an example, when the LBT failure happens in a first secondary cell, the base station 402 may deactivate the first secondary cell, and activate a second secondary cell. The UE 404 may change the first secondary cell to the second secondary cell for communication through a second channel of the unlicensed spectrum.

As another example, when the LBT failure happens in the primary cell, since the primary cell is connected with features such as security, the base station 402 may have to perform HO to the second base station (target base station) 403. For example, the base station 402 may perform HO from the primary cell of the base station 402 to a primary cell of the second base station 403. Even if there may be a problem with the primary cell of the base station 402, the UE 404 may still be able to send the report as RRC messages, based on the configured numbers and/or durations. Further, the source base station 402 may forward the report in HO preparation to the target base station 403, as illustrated at 424.

The base station 402 may also configure the UE 404 with a second maximum number and/or duration for failed transmission attempts, such as SR, RACH, PUSCH, or SRS transmission attempts. The UE 404 may declare an RLF when the second maximum number and/or duration are reached, as illustrated at 428. The second number and duration may be greater than the first maximum number and duration. respectively.

A secondary cell may be deactivated due to the LBT procedure failure. The UE 404 may still monitor the deactivated secondary cell. For example, the UE 404 may periodically measure the channel for the deactivated secondary cell for the contention window to determine whether an LBT procedure would have succeeded. The UE 404 may report when the deactivated cell becomes good again, as illustrated at 430. The UE 404 may keep the deactivated secondary cell in a dormant-type state where the UE 404 still performs measurements, possibly less often. For example, the UE 404 may monitor the deactivated secondary cell occasionally, but not constantly (e.g., at a greater periodicity than an active cell). For example, the UE 404 may report when reference signals are detected successfully for a configured number and/or within a duration. For another, example, the UE 404 may report when channel occupancy and/or RSSI is below a threshold for this secondary cell frequency.

For downlink transmissions, the base station 402 may decide to move to another channel when LBT problems occur on a channel (or cell), as illustrated at 440. The UE 404 may report not detecting reference signals after a configured number or duration below a threshold signal quality, for example, in order to detect hidden node issues. If the failed cell is a secondary cell, the base station 402 may deactivate the secondary cell. If the failed cell is a primary cell, the base station 402 may perform HO to the second base station 403.

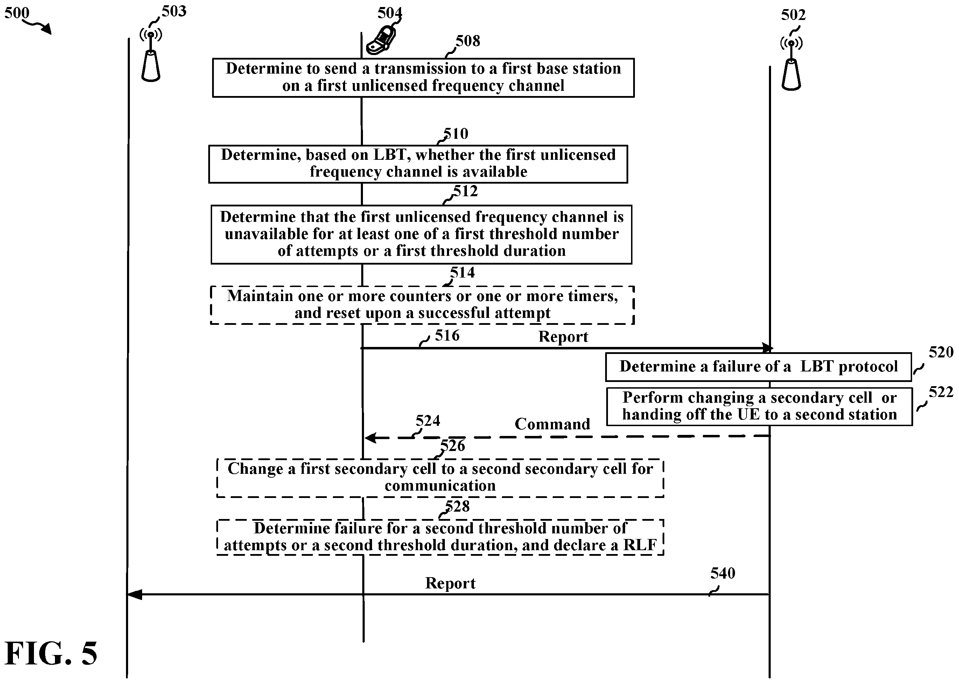

FIG. 5 is a diagram 500 illustrating an example of a solution to address channel access problems. In some aspects, for uplink transmissions, a UE 504 may send a report to a first base station 502 when an LBT protocol fails for transmission attempts, and the first base station 502 may take certain actions, for example, the first base station 502 may de-activate or change a cell for which the report applies or perform HO. For example, the UE 504 may be configured to have one or more threshold numbers of attempts/failed attempts, and/or one or more threshold durations of attempts/failed attempts.

At 508, the UE 504 may determine to send a transmission to the first base station 502 on a first unlicensed frequency channel of an unlicensed frequency spectrum. For example, the transmission may be one of a SR, an RACH procedure, data on a PUSCH, or SRS on the first unlicensed frequency channel.

At 510, the UE 504 may determine for one or more attempts of the LBT protocol, whether each attempt is a failed attempt or a successful attempt for the transmission to the first base station 502.

At 512, the UE 504 may determine that the first unlicensed frequency channel is unavailable based on the LBT protocol failing for at least one of a first threshold number of attempts or a first threshold duration.

At 514, the UE 504 may maintain one or more counters associated with the number of failed attempts or one or more timers associated with the duration of failed attempts based on the LBT protocol to transmit the transmission (e.g., one or more of the SR, the RACH, the PUSCH, or the SRS) on the first unlicensed frequency channel. The UE 504 may reset the one or more counters or the one or more timers upon a determination that the first unlicensed frequency channel is available for the transmission.

For example, the UE 504 may be configured with a first threshold number of attempts/failed attempts, and/or a first threshold duration of attempts/failed attempts for transmissions on the first unlicensed frequency channel. The transmission may include one or more of a SR, an RACH procedure, data on a PUSCH, or SRS on the first unlicensed frequency channel. For example, the first threshold number, the first threshold duration, the one or more counters, and/or the one or more timers may be different if the transmission attempt is inside or outside a TXOP. For example, the UE 504 may maintain a first counter or a first timer for a first type of the transmission and a second counter or a second timer for a second type of the transmission, where the first type of the transmission may be inside the TXOP contended for and provided by the first base station 502, where the second type of the transmission may be outside the TXOP. For example, the second type of the transmission may be transmitted within a transmission opportunity contended for by the UE 504.

For example, the first threshold number of attempts may be less than a number of attempts that triggers an RLF for a cell corresponding to the first unlicensed frequency channel, and the first threshold duration may be less than a duration that triggers an RLF for the cell corresponding to the first unlicensed frequency channel.

For example, the UE 504 may maintain separate counters or separate timers for each access priority of a set of access priorities associated with the transmission. Thus, the first threshold number, the first threshold duration, the counters, and/or the timers may be different for different LBT access priorities. For example, the UE 504 may maintain a plurality of counters and/or timers for a plurality of access priorities. For example, the UE 504 may reset counters or timers for higher access priorities when a counter or a timer for a lower access priority is reset.

At 516, the UE 504 may send a report to the first base station 502 indicating whether the first unlicensed frequency channel is unavailable or available. For example, the report may be sent by the UE 504 to the first base station 502 through a unicast RRC message. For another example, the report may be sent by the UE 504 to the first base station 502 as a MAC CE.

For example, the report may include at least one of identification of a cell providing the first unlicensed frequency channel, a type of the transmission, an LBT type, the first threshold number of attempts, or the first threshold duration. For example, the report may further include a weighted sum of the number of failed attempts and the duration of failed attempts.

For example, the report further includes at least one of an RSRP, an RSRQ, a SINR, a SNR, an RSSI, or a channel occupancy of a set of cells associated with the unlicensed frequency spectrum, where the set of cells may include a cell providing the first unlicensed frequency channel.

For example, the set of cells may include cells that were previously deactivated due to failures of previous transmission attempts based on the LBT protocol. For example, the UE 504 may keep a secondary cell in a dormant-type state when the UE 504 still performs measurements. For example, the UE 504 may report not detecting reference signals after a configured number or duration of reference signals below a threshold signal quality, in order to detect hidden node issues. For example, the UE 504 may report when channel occupancy and/or RSSI for the first unlicensed frequency channel is below a threshold.

At 520, the first base station 502 may determine a failure of the LBT protocol for the transmission from the UE 504 to the first base station 502 through the unlicensed frequency spectrum. For example, the base station 502 may receive the report from the UE 504 indicating the failure of the LBT protocol for the transmission from the UE through the unlicensed frequency spectrum, and determine the failure of the LBT protocol for the transmission from the UE 504 based on the received report.

For example, the first base station 502 may configure the UE 504 with at least one of the first threshold number of attempts or the first threshold duration associated with the failure of the LBT protocol for the transmission, where the report is received based on the configuration. For example, the first base station 502 may further configure the UE 504 with at least one of the second threshold number of attempts or the second threshold duration associated with the RLF between the UE and the first base station, where the second threshold number of attempts may be greater than the first threshold number of attempts, and the second threshold duration may be greater than the first threshold duration.

At 522, the first base station 502 may perform, based on the determination of the failed LBT protocol for the transmission from the UE 504, one of changing a secondary cell at the first base station 502 for the UE 504 for communication through the unlicensed frequency spectrum or handing over the UE 504 to a primary cell at a second base station 503 for communication through the unlicensed frequency spectrum. For example, the first base station 502 may de-activate or change the cell for which the report applies or perform HO.

At 524, the first base station 502 may send a command to the UE 504 indicating deactivation of the first secondary cell for communication through the first unlicensed frequency channel and activation of a second secondary cell for communication through a second unlicensed frequency channel of the unlicensed frequency spectrum. The UE 504 may receive the command as a result of the report sent by the UE 504.

At 526, the UE 504 may change the first secondary cell of the first base station to the second secondary cell of the first base station for communication through the second unlicensed frequency channel upon receiving the command indicating the deactivation of the first secondary cell and the activation of the second secondary cell.

For example, at 528, the UE 504 may determine that the transmission based on the LBT protocol has failed for at least one of the second threshold number of attempts or the second threshold duration, and declare an RLF upon the determination that the transmission based on the LBT protocol has failed for at least one of the second threshold number of attempts or the second threshold duration.

At 540, the first base station 502 may forward the report to the second base station 503 after handing over the UE 504 to the second base station 503. Because the same problems may happen again, the first base station 502 may forward the report to the second base station 503 to inform the second base station 503 of the problems.

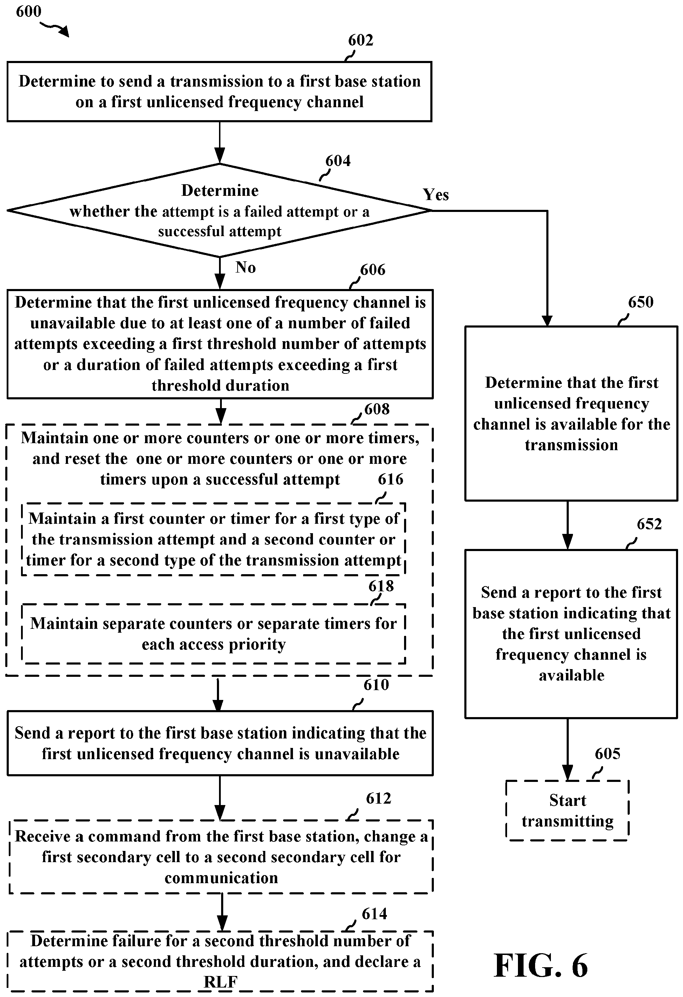

FIG. 6 is a flowchart 600 of a method of wireless communication. The method may be performed by a UE (e.g., the UE 104, 404, 504, the apparatus 702/702', 1050) communicating with a first base station (e.g., the base station 102/180, 402, 502, 750, the apparatus 1002/1002'). The wireless communication may comprise 5G/NR, and/or LTE communication. To facilitate an understanding of the techniques and concepts described herein, the method of flowchart 600 may be discussed with reference to the examples illustrated in FIG. 4 and FIG. 5. Optional aspects may be illustrated in dashed lines. The method may enable the UE to get access to an unlicensed frequency channel of the unlicensed frequency spectrum in a shorter time duration, thereby improving communication reliability. Further, the method may improve communication data rate, capacity and spectral efficiency.

At 602, the UE may determine to send a transmission to the first base station on a first unlicensed frequency channel of an unlicensed frequency spectrum. For example, the transmission may be one of a SR, a RACH procedure, data on a PUSCH, or SRS on the first unlicensed frequency channel. The transmission may include other types of transmission as well.

At 604, the UE may determine, for one or more attempts of a LBT protocol, whether each attempt is a failed attempt or a successful attempt. For example, referring to FIG. 4, in the LBT protocol (procedure), the UE may be required to apply a CCA check prior to transmission, as illustrated at 408. If the channel is occupied, the attempt may be considered a failed attempt, and random back-off within a contention window may apply. The UE may have a contention window for a duration of time, and the UE may listen to the channel for the duration of time. For example, the UE may have a contention window of 5ms, and the UE may listen to the channel for 5ms. If the channel is clear, the UE determines that the attempt is a successful attempt. In an aspect, determining, for one or more attempts of the LBT protocol, whether each attempt is a failed attempt or a successful attempt may include periodically performing the LBT protocol when no transmission is available to send. That is, the one or more attempts of the LBT protocol may include virtual transmission attempts. Periodically performing the LBT protocol may be based on a first periodicity for a LBT protocol attempt during a transmission opportunity contended for and provided by the first base station and a second periodicity for a LBT protocol attempt outside the transmission opportunity.

At 650, the UE may determine the first unlicensed frequency channel is available for the transmission. For example, the determination may be based on one or more successful attempts of the LBT protocol. At 654, the UE may subsequently send a report to the first base station indicating that the first unlicensed frequency channel is available. At 605, before or after sending the report at 652, the UE may send the transmission.

At 606, the UE may determine that the first unlicensed frequency channel is unavailable based on the LBT protocol failing due to at least one of a number of failed attempts exceeding a first threshold number of failed attempts or a duration of failed attempts exceeding a first threshold duration. For example, referring to FIG. 4, the base station 402 may configure the UE 404 with a first number of transmission attempts and a first duration. The UE 404 may trigger the report when the LBT protocol fails for the first number of transmission attempts and/or the first duration. As an example, the UE 404 may trigger the report after the transmission attempts for SR, RACH, PUSCH, or SRS fail a configured first maximum number of attempts or a configured first maximum duration, as illustrated at 412.

At 608, the UE may maintain one or more counters associated with a number of failed attempts or one or more timers associated with a duration of failed attempts based on the LBT protocol to transmit the transmission. The transmission may be one or more of the SR, the RACH, the PUSCH, or the SRS on the first unlicensed frequency channel. The UE may reset the one or more counters or the one or more timers upon a determination that the first unlicensed frequency channel is available for the transmission. For example, the UE may determine that the first unlicensed frequency channel is available for the transmission based on a successful attempt. For example, referring to FIG. 4, when a transmission attempt fails, a counter and/or timer may be triggered. The counter or timer may start counting or running. After a successful attempt, the counter or timer may be reset. The counter or timer may increment by 1 after each failed attempt, until reach a configured maximum number of attempts or a configured maximum duration. For example, the failed attempt may be due to LBT procedure failure.

At 616, the UE 404 may maintain a first counter or a first timer for a first type of the transmission and a second counter or a second timer for a second type of the transmission, where the first type of the transmission is inside a TXOP contended for and provided by the first base station, the second type of the transmission is outside the TXOP contended for and provided by the first base station, and the second type of the transmission is transmitted within a transmission opportunity contended for by the UE. For example, referring to FIG. 4, at 414, a first configured maximum number of attempts for the transmission, a first configured maximum duration, a counter and/or timer may be different if the transmission is inside or outside the TXOP. When the transmission is inside the TXOP, the base station 402 has already contended for the channel. For the duration of TXOP, the base station 402 has already obtained access to the channel. Thus, the UE 404 may have an LBT with a minimum duration. For example, the UE 404 may have the LBT with a duration of 25 µs. When the transmission is outside the TXOP, the UE 404 has to contend for the channel, thus the UE 404 may have an LBT with a different duration, based on contention window. Thus, the UE 404 may have different first configured maximum numbers, durations, counters and/or timers when the transmission is inside or outside the TXOP.

For example, the first threshold number of attempts may be less than a number of attempts that triggers an RLF for a cell corresponding to the first unlicensed frequency channel, and the first threshold duration may be less than a duration that triggers an RLF for the cell corresponding to the first unlicensed frequency channel. For example, referring to FIG. 4, the first configured maximum number of attempts or a first configured maximum duration may be different and smaller than a threshold which triggers an RLF, as illustrated at 418.

At 618, the UE may maintain separate counters or separate timers for each access priority of a set of access priorities associated with the transmission attempt. For example, the UE may reset counters or timers for higher access priorities when a counter or a timer for a lower access priority is reset. For example, referring to FIG. 4, separate first configured maximum numbers, first configured maximum durations, counters and/or timers may be used for different access priorities, as illustrated at 416. To provide differentiation to channel access priorities based on the type of traffic served, there may be different priority classes. For example, there may be four LBT priority classes, 1, 2, 3, or 4, while 1 being the highest. Different LBT priority classes may have different contention window sizes (CWS). Each access priority may have its own maximum and minimum CWS. For example, higher access priority may have a lower maximum CWS. The highest access priority may have the lowest maximum CWS. For example, the lowest maximum contention window size may be 25 µs. The UE 404 may track different priority classes differently. For example, each access priority may have its own first configured maximum number, duration, counter and/or timer. For example, the counters or timers for higher access priorities may also be reset when a counter or a timer for an access priority is reset.

At 610, the UE may send a report to the first base station indicating that the first unlicensed frequency channel is available. For example, the report may be sent by the UE to the first base station through a unicast RRC message. For another example, the report may be sent by the UE to the first base station as a MAC CE. For example, referring to FIG. 4, once the event has been triggered, the UE 404 may report to the base station 402. The base station 402 may configure the first maximum number of attempts and/or the first maximum duration in a way such that the UE 404 may still be able to send the report, for example, as a radio resource control (RRC) message, when reaching the first maximum number of attempts and/or the first maximum duration, before the channel is too bad. The UE 404 may also send the report as an MAC CE. In an aspect, if the first unlicensed frequency channel is provided by a secondary cell of the first base station, the UE may send the through a primary cell of the first base station.

For example, the report may include at least one of identification of a cell providing the first unlicensed frequency channel, a type of the transmission, an LBT type, the first threshold number of attempts, or the first threshold duration. For example, the report may further include a weighted sum of the number of failed attempts and the duration of failed attempts. For example, referring to FIG. 4, the report may include any information available to the UE. For example, the report may include when the LBT failure happens, why this happens, which frequency/channel the LBT failure happens, what the attempt type is, channel quality, measurement for other cells, etc. For example, the report may include the channel (cell), attempt type (SR, RACH, PUSCH, SRS), LBT type (one shot, Cat2, Cat4), the number of attempts, or duration of the failure event.

For example, the report may further include at least one of an RSRP, an RSRQ, a SINR, a SNR, an RSSI, or a channel occupancy of a set of cells associated with the unlicensed frequency spectrum, where the set of cells may include a cell providing the first unlicensed frequency channel. For example, referring to FIG. 4, the report may also include an RSRP, an RSRQ, a SINR, a SNR, an RSSI, or channel occupancy of all cells and frequencies configured by measurement objects. For example, the report may further include a weighted sum of the number of failed attempts and the duration of failed attempts.

For example, the set of cells may include cells that were previously deactivated due to failures of previous transmission attempts based on the LBT protocol. For example, referring to FIG. 4, a secondary cell may be deactivated due to the LBT procedure failure. The UE 404 may still monitor the deactivated secondary cell. The UE 404 may report when the deactivated cell becomes good again, as illustrated at 430. The UE 404 may keep the deactivated secondary cell in a dormant-type state where the UE 404 still performs measurements, possibly less often. For example, the UE 404 may monitor the deactivated secondary cell occasionally, but not constantly. For example, the UE 404 may report when reference signals are detected successfully for a configured number and/or within a duration. For another, example, the UE 404 may report when channel occupancy and/or RSSI is below a threshold for this secondary cell frequency.

In some aspects, the first unlicensed frequency channel may be provided by a first secondary cell of the first base station, and the report may be sent through a primary cell of the first base station. For example, at 612, the UE may receive a command from the first base station indicating deactivation of the first secondary cell for communication through the first unlicensed frequency channel and activation of a second secondary cell for communication through a second unlicensed frequency channel of the unlicensed frequency spectrum, where the command may be received as a result of the report sent by the UE. The UE may change the first secondary cell of the first base station to the second secondary cell of the first base station for communication through the second unlicensed frequency channel upon receiving the command indicating the deactivation of the first secondary cell and the activation of the second secondary cell. In some aspects, the UE may move in a HO from the first base station to the second base station. For example, referring to FIG. 4, at 422, when the base station 402 receives the report, the base station 402 may de-activate or change the cell for which the report applies or perform HO. A base station may have a primary cell and several secondary cells. For example, each cell may be 20 MHZ. The base station may have multiple 20 MHz cells, one being the primary cell, and the others being the secondary cells. For example, when the LBT failure happens in a secondary cell, the base station 402 may deactivate the secondary, and activate a second secondary cell. The UE 404 may change the secondary cell to the second secondary cell for communication through a second channel.

At 614, the UE may determine that the transmission based on the LBT protocol has failed for at least one of the second threshold number of attempts or the second threshold duration, and declare an RLF upon the determination that the transmission based on the LBT protocol has failed for at least one of the second threshold number of attempts or the second threshold duration. For example, referring to FIG. 4, the base station 402 may also configure the UE 404 with a second maximum number and duration for transmission attempts due to LBT failures. The UE 404 may declare RLF when the second maximum number and duration are reached, as illustrated at 428. The second number and duration may be greater than the first maximum number and duration.

Referring again to steps 610, 652, the reports may be sent periodically to the first base station to inform the first base station of the failure or the success of the LBT protocol.

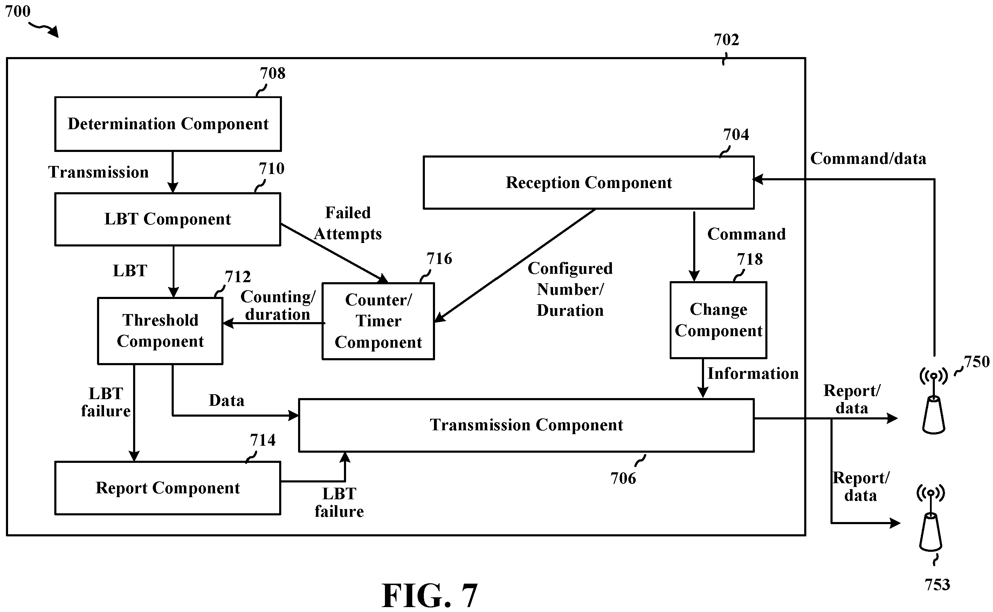

FIG. 7 is a conceptual data flow diagram 700 illustrating the data flow between different means/components in an example apparatus 702. The apparatus may be a wireless device, e.g., a UE (e.g., UE 104, 404, 504, the apparatus 702/702', 1050, etc.) communicating with a first base station (e.g., the base station 102/180, 402, 502, 750, the apparatus 1002/1002', etc.). The wireless communication may comprise a 5G NR and/or LTE communication, as described herein.

The apparatus includes a transmission component 706 for transmitting a report/message to the first base station.

The apparatus includes a determination component 708 for determining to send a transmission to the first base station on a first unlicensed frequency channel of an unlicensed frequency spectrum. For example, the transmission may be one of a SR, an RACH procedure, data on a PUSCH, or SRS on the unlicensed frequency spectrum.

The apparatus includes an LBT component 710 for determining, based on an LBT protocol, whether an attempt is a failed attempt or a successful attempt for the transmission to the first base station.

The apparatus includes a threshold component 712 for determining that the first unlicensed frequency channel is one of unavailable based on the LBT protocol failing due to a number of failed attempts exceeding for a first threshold number of failed attempts or a duration of failed attempts exceeding a first threshold duration, or available based on the LBT protocol being successful for the transmission.

The apparatus includes a report component 714 for sending a report to the first base station indicating one of the failure of the LBT protocol for the transmission or the success of the LBT protocol for the transmission. As discussed above, the report may be sent as part of a set of reports, each of which are sent periodically to inform the first base station of the failure or the success of the LBT protocol.

The apparatus may include a counter/timer component 716 for maintaining one or more counters associated with a number of failed attempts or one or more timers associated with a duration of failed attempts based on the LBT protocol to transmit one or more of the SR, the RACH, the PUSCH, or the SRS on the first unlicensed frequency channel. For example, the counter/timer component 716 may be configured to reset the one or more counters or the one or more timers upon a determination that the first unlicensed frequency channel is available for the transmission. For example, the determination that the first unlicensed frequency channel is available may be in response to a successful attempt based on the LBT protocol to transmit one or more of the SR, the RACH, the PUSCH, or the SRS on the first unlicensed frequency channel.

The apparatus includes a reception component 704 for data/commands from the first base station. For example, the reception component 704 may be configured to receive a command from the first base station indicating deactivation of the first secondary cell for communication through the first unlicensed frequency channel and activation of a second secondary cell for communication through a second unlicensed frequency channel of the unlicensed frequency spectrum, where the information may be received as a result of the report sent by the UE.

The apparatus may include a change component 718 for changing the first secondary cell of the first base station to the second secondary cell of the first base station for communication through the second unlicensed frequency channel upon receiving the information indicating the deactivation of the first secondary cell and the activation of the second secondary cell.

The apparatus may include additional components that perform each of the blocks of the algorithm in the aforementioned flowcharts of FIGs. 4-6. As such, each block in the aforementioned flowcharts of FIGs. 4-6 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

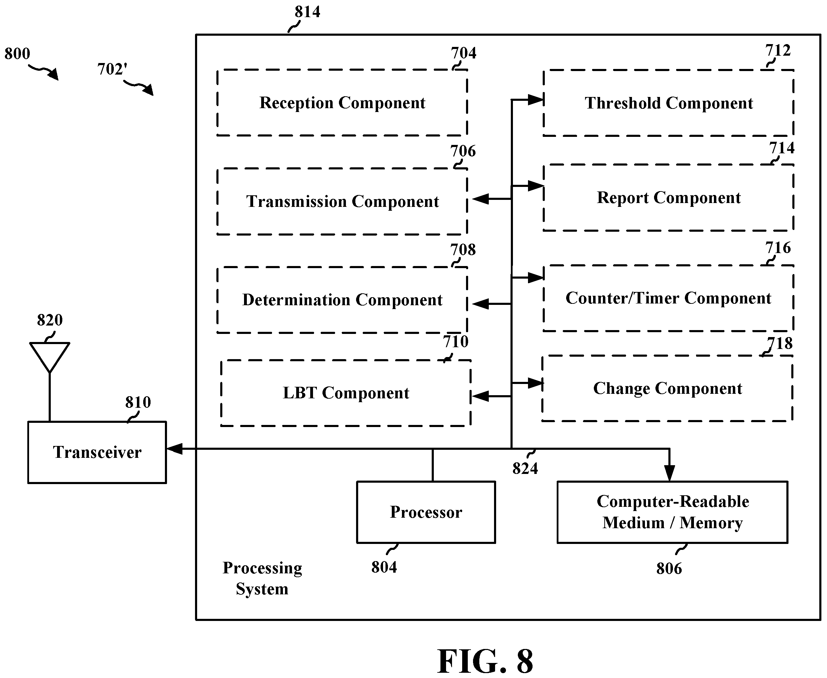

FIG. 8 is a diagram 800 illustrating an example of a hardware implementation for an apparatus 702' employing a processing system 814. The processing system 814 may be implemented with a bus architecture, represented generally by the bus 824. The bus 824 may include any number of interconnecting buses and bridges depending on the specific application of the processing system 814 and the overall design constraints. The bus 824 links together various circuits including one or more processors and/or hardware components, represented by the processor 804, the components 704, 706, 708, 710, 712, 714, 716, 718 and the computer-readable medium/memory 806. The bus 824 may also link various other circuits such as timing sources, peripherals, voltage regulators, and power management circuits, which are well known in the art, and therefore, will not be described any further.

The processing system 814 may be coupled to a transceiver 810. The transceiver 810 is coupled to one or more antennas 820. The transceiver 810 provides a means for communicating with various other apparatus over a transmission medium. The transceiver 810 receives a signal from the one or more antennas 820, extracts information from the received signal, and provides the extracted information to the processing system 814, specifically the reception component 704. In addition, the transceiver 810 receives information from the processing system 814, specifically the transmission component 706, and based on the received information, generates a signal to be applied to the one or more antennas 820. The processing system 814 includes a processor 804 coupled to a computer-readable medium/memory 806. The processor 804 is responsible for general processing, including the execution of software stored on the computer-readable medium/memory 806. The software, when executed by the processor 804, causes the processing system 814 to perform the various functions described supra for any particular apparatus. The computer-readable medium / memory 806 may also be used for storing data that is manipulated by the processor 804 when executing software. The processing system 814 further includes at least one of the components 704, 706, 708, 710, 712, 714, 716, 718. The components may be software components running in the processor 804, resident/stored in the computer readable medium/memory 806, one or more hardware components coupled to the processor 804, or some combination thereof. In one configuration, the processing system 814 may be a component of a UE, e.g., UE 350, and may include the memory 360 and/or at least one of the TX processor 368, the RX processor 356, and the controller/processor 359.

In one configuration, the apparatus 702/702' for wireless communication includes means for determining to send a transmission to a first base station on a first unlicensed frequency channel of an unlicensed frequency spectrum; means for determining, for one or more attempts of a LBT protocol, whether each attempt is a failed attempt or a successful attempt; means for determining that the first unlicensed frequency channel is one of: unavailable based on the LBT protocol failing due to a number of failed attempts exceeding a first threshold number of failed attempts or a duration of failed attempts exceeding a first threshold duration, or available based on the LBT protocol being successful for the transmission; and means for sending a report to the first base station indicating whether the first unlicensed frequency channel is unavailable or available through a unicast radio resource control (RRC) message or a medium access control (MAC) control element (CE).

In one configuration, the apparatus 702/702' may further include means for maintaining one or more counters associated with a the number of failed attempts or one or more timers associated with a the duration of failed attempts based on the LBT protocol to transmit the transmission on the first unlicensed frequency channel.. The apparatus may further include means for resetting the one or more counters or the one or more timers upon a determination that the first unlicensed frequency channel is available for the transmission.

In one configuration, the apparatus 702/702' may further include means for receiving a command from the first base station indicating deactivation of the first secondary cell for communication through the first unlicensed frequency channel and activation of a second secondary cell for communication through a second unlicensed frequency channel of the unlicensed frequency spectrum, the command being received as a result of the report sent by the UE; and means for changing the first secondary cell of the first base station to the second secondary cell of the first base station for communication through the second unlicensed frequency channel upon receiving the command indicating the deactivation of the first secondary cell and the activation of the second secondary cell. In one configuration, the apparatus 702/702' may further include means for moving in a handover from the first base station to a second base station. In one configuration, the apparatus 702/702' may further include means for determining that the transmission based on the LBT protocol has failed for at least one of a second threshold number of failed attempts or a second threshold duration, the second threshold number of failed attempts being greater than the first threshold number of failed attempts, the second threshold duration being greater than the first threshold duration; and means for declaring a RLF upon the determination that the transmission based on the LBT protocol has failed for at least one of the second threshold number of failed attempts or the second threshold duration.

The aforementioned means may be one or more of the aforementioned components of the apparatus 702 and/or the processing system 814 of the apparatus 702' configured to perform the functions recited by the aforementioned means. As described supra, the processing system 814 may include the TX Processor 368, the RX Processor 356, and the controller/processor 359. As such, in one configuration, the aforementioned means may be the TX Processor 368, the RX Processor 356, and the controller/processor 359 configured to perform the functions recited by the aforementioned means.

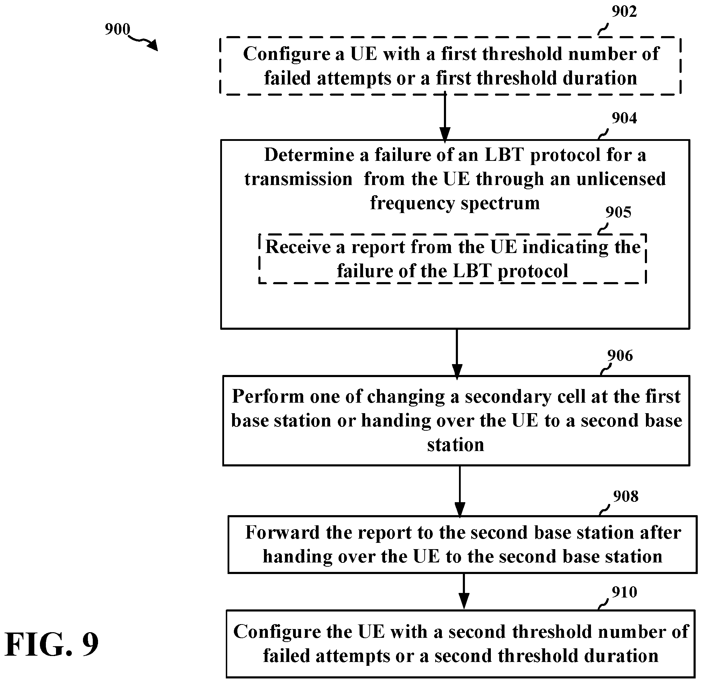

FIG. 9 is a flowchart 900 of a method of wireless communication. The method may be performed by a base station (e.g., the base station 102/180, 402, 502, 750, the apparatus 1002/1002') communicating with a UE (e.g., the UE 104, 404, 504, the apparatus 702/702', 1050). The wireless communication may comprise 5G/NR, and/or LTE communication. To facilitate an understanding of the techniques and concepts described herein, the method of flowchart 900 may be discussed with reference to the examples illustrated in FIG. 4 and FIG. 5. Optional aspects may be illustrated in dashed lines. The method may enable the UE to get access to an unlicensed frequency channel of the unlicensed frequency spectrum fin a shorter time duration, thereby improving communication reliability. Further, the method may improve communication data rate, capacity and spectral efficiency.

At 904, the base station may determine a failure of an LBT protocol for a transmission from the UE to the first base station through an unlicensed frequency spectrum. For example, the transmission may be one of a SR, an RACH procedure, data on a PUSCH, or SRS on the first unlicensed frequency channel. For example, the base station may receive a report from the UE indicating the failure of the LBT protocol for the transmission from the UE through the unlicensed frequency spectrum, and determine the failure of the LBT protocol for the transmission from the UE based on the received report, as illustrated at 905. For example, referring to FIG. 4, when channel access failure happens, at the UE side, the UE 404 may report to the base station 402, as illustrated at 420. For example, when transmission attempts fail, the UE 404 may send a report to the base station, where the report shows that there is an issue on the unlicensed channel. The base station 402 may determine the failure of the LBT protocol for the transmission from the UE based on the received report. The base station 402 may take actions, such as de-activing or changing a cell for which the report applies or performing HO, as illustrated at 422.

In some aspects, the base station may configure the UE with a first threshold number of failed attempts, and/or a first threshold duration of failed attempts for one of a SR, an RACH procedure, data on a PUSCH, or SRS on the first unlicensed frequency channel, as illustrated at 902. For example, the first threshold number, the first threshold duration, the one or more counters, and/or the one or more timers may be different if the transmission attempt is inside or outside a TXOP. For example, referring to FIG. 4, at 414, for example, for a SR transmission, a first configured maximum number of attempts for SR, a first configured maximum duration, a counter and/or timer may be different if SR is inside or outside TXOP. Further, for RACH, PUSCH, or SRS transmission attempt, if the RACH, PUSCH, or SRS transmission attempt is inside or outside the TXOP, there may be different first configured maximum numbers, first maximum durations, counters and/or timers as well. For another example, referring to FIG. 4, separate first configured maximum numbers, first configured maximum durations, counters and/or timers may be used for different access priorities, as illustrated at 416.

For example, the first threshold number of attempts may be less than a number of attempts that triggers an RLF for a cell corresponding to the first unlicensed frequency channel, and the first threshold duration may be less than a duration that triggers an RLF for the cell corresponding to the first unlicensed frequency channel. For example, referring to FIG. 4, the first configured maximum number of attempts or a first configured maximum duration may be different and smaller than a threshold which triggers a radio link failure (RLF), as illustrated at 418.

For example, the report may be sent by the UE to the first base station through a unicast RRC message. For another example, the report may be sent by the UE to the first base station as an MAC CE. For example, the report may include at least one of information associated with a cell providing the first unlicensed frequency channel, a type of the transmission, an LBT type, the first threshold number of attempts, or the first threshold duration. For example, the report further includes at least one of an RSRP, an RSRQ, a SINR, a SNR, an RSSI, or a channel occupancy of a set of cells associated with the unlicensed frequency spectrum, where the set of cells may include a cell providing the first unlicensed frequency channel. For example, the report may further include a weighted sum of the number of failed attempts and the duration of failed attempts. For example, referring to FIG. 4, the report may include any information available to the UE. For example, the report may include when the LBT failure happens, why this happens, which frequency/channel the LBT failure happens, what the attempt type is, channel quality, measurement for other cells, etc. For example, the report may include the channel (cell), attempt type (SR, RACH, PUSCH, SRS), LBT type (one shot, Cat2, Cat4), the number of attempts, or duration of the failure event. For example, the report may also include an RSRP, an RSRQ, a SINR, a SNR, an RSSI, or channel occupancy of all cells and frequencies configured by measurement objects. For example, the report may further include a weighted sum of the number of failed attempts and the duration of failed attempts.

For example, the set of cells may include cells that were previously deactivated due to failures of previous transmission attempts based on the LBT protocol. For example, referring to FIG. 4, a secondary cell may be deactivated due to the LBT procedure failure. The UE 404 may still monitor the deactivated secondary cell. The UE 404 may report when the deactivated cell becomes good again, as illustrated at 430. The UE 404 may keep the deactivated secondary cell in a dormant-type state where the UE 404 still performs measurements, possibly less often. For example, the UE 404 may monitor the deactivated secondary cell occasionally, but not constantly. For instance, the UE 404 may perform virtual transmission attempts on the deactivated secondary cell according to the periodicity. As another example, for the downlink, the UE 404 may report when reference signals are detected successfully for a configured number and/or within a duration. For another, example, the UE 404 may report when channel occupancy and/or RSSI is below a threshold for this secondary cell frequency.

At 906, the base station may perform, based on the determination of the failure of the LBT protocol for the transmission from the UE, one of changing a secondary cell at the first base station for the UE for communication through the unlicensed frequency spectrum or handing over the UE to a primary cell at a second base station for communication through the unlicensed frequency spectrum. For example, referring to FIG. 4, at 422, when the base station 402 receives the report, the base station 402 may de-activate or change the cell for which the report applies or perform HO. A base station may have a primary cell and several secondary cells. For example, each cell may be 20 MHZ. The base station may have multiple 20 MHz cells, one being the primary cell, and the others being the secondary cells. For example, when the LBT failure happens in a secondary cell, the base station 402 may deactivate the secondary, and activate a second secondary cell. The UE 404 may change the secondary cell to the second secondary cell for communication through a second channel.

At 908, the base station may forward the report to the second base station after handing over the UE to the second base station. For example, referring to FIG. 4, the source base station 402 may forward the report in HO preparation to the target base station 403, as illustrated at 424.

At 910, the base station may configure the UE with at least one of a second threshold number of failed attempts or a second threshold duration associated with an RLF between the UE and the first base station. For example, referring to FIG. 4, the base station 402 may also configure the UE 404 with a second maximum number and duration for SR, RACH, PUSCH, and SRS attempts due to LBT failures. The UE 404 may declare RLF when the second maximum number and duration are reached, as illustrated at 428. The second number and duration may be greater than the first maximum number and duration.

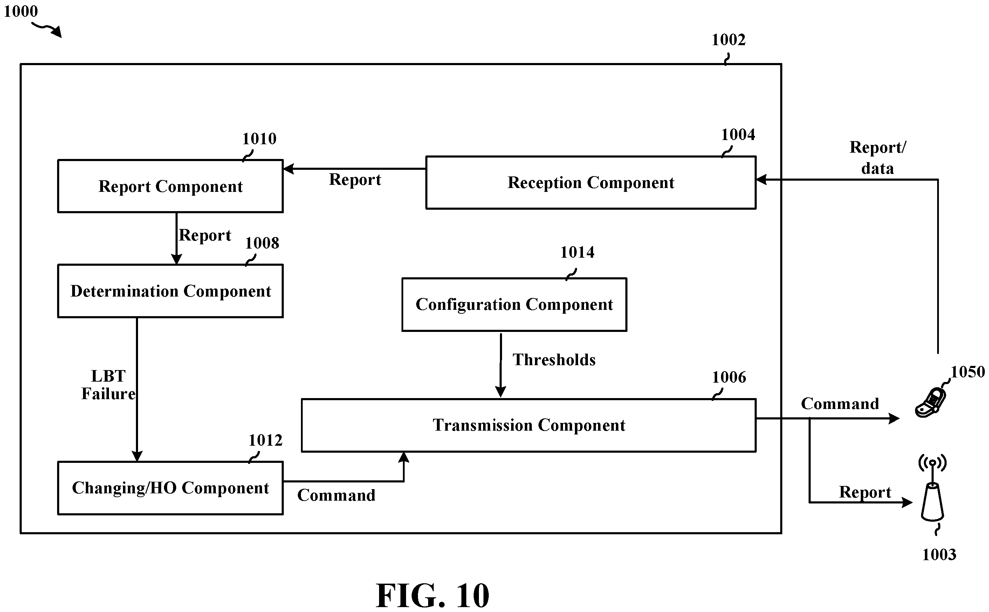

FIG. 10 is a conceptual data flow diagram 1000 illustrating the data flow between different means/components in an example apparatus 1002. The apparatus may be a wireless device, e.g., a first base station (e.g., the base station 102/180, 402, 502, 750, the apparatus 1002/1002', etc.) communicating with a UE (e.g., UE 104, 404, 504, the apparatus 702/702', 1050, etc.) and a second base station 1003 (e.g., the base station 403, 503, 753, etc.). The wireless communication may comprise a 5G NR and/or LTE communication, as described herein.

The apparatus includes a determination component 1008 for determining a failure of an LBT protocol for the transmission from the UE to the first base station through the unlicensed frequency spectrum. For example, the transmission may be one of a SR, an RACH procedure, data on a PUSCH, or SRS on the unlicensed frequency spectrum.

The apparatus includes a changing/HO component 1012 for performing, based on the determination of the failed LBT protocol for the transmission from the UE, one of changing a secondary cell at the first base station for the UE for communication through the unlicensed frequency spectrum or handing over the UE to a primary cell at the second base station for communication through the unlicensed frequency spectrum.

The apparatus may include a report component 1010. The report component 1010 may be configured to receive, via a reception component 1004, a report from the UE indicating a failure of an LBT protocol for a transmission from the UE through the unlicensed frequency spectrum. For example, the base station may be configured to determine the failure of the LBT protocol for the transmission from the UE based on the received report. For example, the report may be received through a unicast RRC message from the UE. For example, the report may be received as a MAC CE.

The apparatus includes a transmission component 1006 for transmitting. For example, the transmission component 1006 may be configured to forward the report to the second base station after handing over the UE to the second base station. For example, the transmission component 1006 may be configured to transmit a command to the UE indicating deactivation of a first secondary cell for communication through a first unlicensed frequency channel and activation of a second secondary cell for communication through a second unlicensed frequency channel of the unlicensed frequency spectrum, where the command is transmitted as a result of the report sent by the UE.

The apparatus may include a configuration component 1014. For example, the configuration component 1014 may configure the UE with at least one of a first threshold number of failed attempts or a first threshold duration associated with a failure of the LBT protocol for the transmission, where the report is received based on the configuration. For example, the configuration component 1014 may configure the UE with at least one of a second threshold number of failed attempts or a second threshold duration associated with an RLF between the UE and the first base station, where the second threshold number of failed attempts may be greater than the first threshold number of failed attempts, and the second threshold duration may be greater than the first threshold duration.

The apparatus may include additional components that perform each of the blocks of the algorithm in the aforementioned flowcharts of FIGs. 4, 5 and 9. As such, each block in the aforementioned flowcharts of FIGs. 4, 5 and 9 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

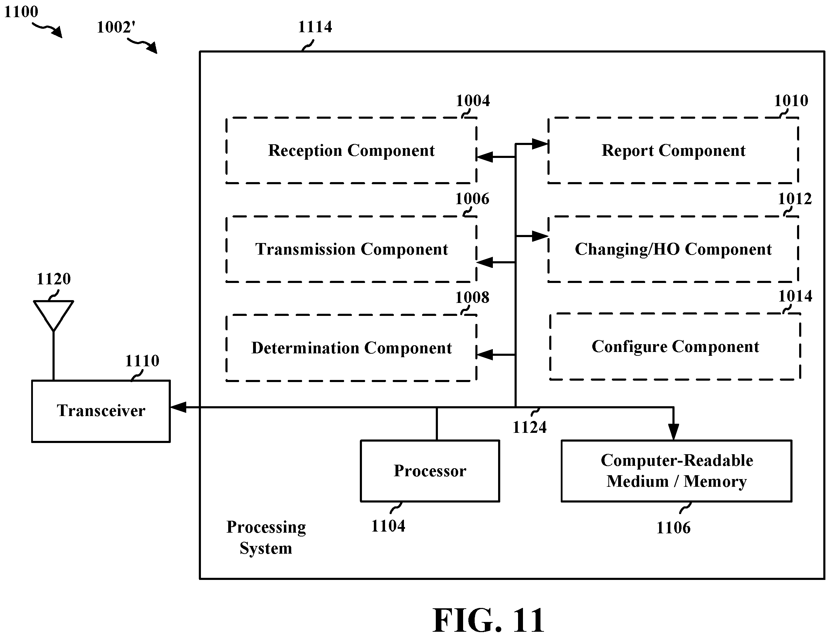

FIG. 11 is a diagram 1100 illustrating an example of a hardware implementation for an apparatus 1002' employing a processing system 1114. The processing system 1114 may be implemented with a bus architecture, represented generally by the bus 1124. The bus 1124 may include any number of interconnecting buses and bridges depending on the specific application of the processing system 1114 and the overall design constraints. The bus 1124 links together various circuits including one or more processors and/or hardware components, represented by the processor 1104, the components 1004, 1006, 1008, 1010, 1012, 1014, and the computer-readable medium / memory 1106. The bus 1124 may also link various other circuits such as timing sources, peripherals, voltage regulators, and power management circuits, which are well known in the art, and therefore, will not be described any further.

The processing system 1114 may be coupled to a transceiver 1110. The transceiver 1110 is coupled to one or more antennas 1120. The transceiver 1110 provides a means for communicating with various other apparatus over a transmission medium. The transceiver 1110 receives a signal from the one or more antennas 1120, extracts information from the received signal, and provides the extracted information to the processing system 1114, specifically the reception component 1004. In addition, the transceiver 1110 receives information from the processing system 1114, specifically the transmission component 1006, and based on the received information, generates a signal to be applied to the one or more antennas 1120. The processing system 1114 includes a processor 1104 coupled to a computer-readable medium / memory 1106. The processor 1104 is responsible for general processing, including the execution of software stored on the computer-readable medium / memory 1106. The software, when executed by the processor 1104, causes the processing system 1114 to perform the various functions described *supra* for any particular apparatus. The computer-readable medium / memory 1106 may also be used for storing data that is manipulated by the processor 1104 when executing software. The processing system 1114 further includes at least one of the components 1004, 1006, 1008, 1010, 1012, 1014. The components may be software components running in the processor 1104, resident/stored in the computer readable medium / memory 1106, one or more hardware components coupled to the processor 1104, or some combination thereof. The processing system 1114 may be a component of the base station 310 and may include the memory 376 and/or at least one of the TX processor 316, the RX processor 370, and the controller/processor 375.

In one configuration, the apparatus 1002/1002' for wireless communication includes means for determining a failure of an LBT protocol for a transmission from a UE to a first base station through an unlicensed frequency spectrum; and means for performing, based on the determination of the failed LBT protocol for the transmission from the UE, one of changing a secondary cell at the first base station for the UE for communication through the unlicensed frequency spectrum or handing over the UE to a primary cell at a second base station for communication through the unlicensed frequency spectrum. For example, the transmission from the UE may be one of a SR, an RACH procedure, data on a PUSCH, or SRS on the unlicensed frequency spectrum. In one configuration, the means for determining the failure of the LBT protocol for the transmission from the UE is further configured to receive a report from the UE indicating the failure of the LBT protocol for the transmission from the UE through the unlicensed frequency spectrum; and determine the failure of the LBT protocol for the transmission from the UE based on the received report.

In one configuration, the apparatus 1002/1002' may further include means for forwarding the report to the second base station after handing over the UE to the second base station. In one configuration, the apparatus 1002/1002' may further include means for configuring the UE with at least one of a first threshold number of failed attempts or a first threshold duration associated with a failure of the LBT protocol for the transmission, the report being received based on the configuration.

In one configuration, the apparatus 1002/1002' may further include means for configuring the UE with at least one of a second threshold number of failed attempts or a second threshold duration associated with a RLF between the UE and the first base station, the second threshold number of failed attempts being greater than the first threshold number of failed attempts, the second threshold duration being greater than the first threshold duration. For example, the report may be received through an RRC message from the UE. For example, the report may include at least one of information associated with a cell providing the unlicensed frequency channel, a type of the transmission, an LBT type, a number of failed attempts associated with the failure of the LBT protocol for the transmission from the UE, or a duration of failed attempts associated with the failure of the LBT protocol for the transmission from the UE. For example, the report may further include a weighted sum of the number of failed attempts and the duration of failed attempts. For example, the report may further include at least one of an RSRP, an RSRQ, a SINR, a SNR, an RSSI, or a channel occupancy of a set of cells associated with the unlicensed frequency spectrum. For example, the set of cells may include cells that the first base station previously deactivated due to failures of previous transmissions attempts from the UE based on the LBT protocol.

The aforementioned means may be one or more of the aforementioned components of the apparatus 1002 and/or the processing system 1114 of the apparatus 1002' configured to perform the functions recited by the aforementioned means. As described *supra,* the processing system 1114 may include the TX Processor 316, the RX Processor 370, and the controller/processor 375. As such, in one configuration, the aforementioned means may be the TX Processor 316, the RX Processor 370, and the controller/processor 375 configured to perform the functions recited by the aforementioned means.

### SOME FURTHER EXAMPLE IMPLEMENTATIONS

A first example method of wireless communication at a user equipment (UE), comprising: determining to send a transmission to a first base station on a first unlicensed frequency channel of an unlicensed frequency spectrum; determining, for one or more attempts of a listen before talk (LBT) protocol, whether each attempt is a failed attempt or a successful attempt; determining that the first unlicensed frequency channel is one of: unavailable based on the LBT protocol failing due to at least one of a number of failed attempts exceeding a first threshold number of failed attempts or a duration of failed attempts exceeding a first threshold duration, or available based on at least one attempt of the LBT protocol being successful for the transmission; and sending a report to the first base station indicating whether the first unlicensed frequency channel is unavailable or available through a unicast radio resource control (RRC) message or a medium access control (MAC) control element (CE).

The above first example method, wherein the transmission is one of a scheduling request (SR), a random access channel (RACH) procedure, data on a physical uplink shared channel (PUSCH), or sounding reference signals (SRS) on the first unlicensed frequency channel.

Any of the above first example methods, further comprising: maintaining one or more counters associated with the number of failed attempts or one or more timers associated with the duration of failed attempts based on the LBT protocol to transmit the transmission on the first unlicensed frequency channel; and resetting the one or more counters or the one or more timers upon a determination that the first unlicensed frequency channel is available for the transmission.

Any of the above first example methods, wherein the maintaining the one or more counters or the one or more timers comprises maintaining a first counter or a first timer for a first type of the transmission and a second counter or a second timer for a second type of the transmission, the first type of the transmission being inside a transmission opportunity contended for and provided by the first base station, the second type of the transmission being outside the transmission opportunity contended for and provided by the first base station, the second type of the transmission being transmitted within a transmission opportunity contended for by the UE.

Any of the above first example methods, wherein the maintaining the one or more counters or the one or more timers comprises maintaining separate counters or separate timers for each access priority of a set of access priorities associated with the transmission.

Any of the above first example methods, wherein the maintaining separate counters or separate timers for each access priority of the set of access priorities comprises resetting counters or timers for higher access priorities when a counter or a timer for an access priority is reset.

Any of the above first example methods, wherein the first threshold number of failed attempts is less than a number of failed attempts that triggers a radio link failure (RLF) for a cell corresponding to the first unlicensed frequency channel, and the first threshold duration is less than a duration that triggers an RLF for the cell corresponding to the first unlicensed frequency channel.

Any of the above first example methods, wherein the report includes at least one of an identification of a cell providing the first unlicensed frequency channel, a type of the transmission, an LBT type, the number of failed attempts, or the duration of failed attempts.

Any of the above first example methods, wherein the report further includes a weighted sum of the number of failed attempts and the duration of failed attempts.

Any of the above first example methods, wherein the report further includes at least one of a reference signal received power (RSRP), a reference signal received quality (RSRQ), a signal to interference plus noise ratio (SINR), a signal to noise ratio (SNR), a reference signal strength indication (RSSI), or a channel occupancy of a set of cells associated with the unlicensed frequency spectrum, the set of cells including a cell providing the first unlicensed frequency channel.

Any of the above first example methods, wherein the set of cells includes cells that were previously deactivated due to failures of previous transmission attempts based on the LBT protocol.

Any of the above first example methods, wherein the first unlicensed frequency channel is provided by a first secondary cell of the first base station, and wherein the report is sent through a primary cell of the first base station.

Any of the above first example methods, further comprising: receiving a command from the first base station indicating deactivation of the first secondary cell for communication through the first unlicensed frequency channel and activation of a second secondary cell for communication through a second unlicensed frequency channel of the unlicensed frequency spectrum, the command being received as a result of the report sent by the UE; and changing the first secondary cell of the first base station to the second secondary cell of the first base station for communication through the second unlicensed frequency channel upon receiving the command indicating the deactivation of the first secondary cell and the activation of the second secondary cell.

Any of the above first example methods, further comprising moving in a handover from the first base station to a second base station and sending the report to the second base station.

Any of the above first example methods, further comprising: determining that the transmission based on the LBT protocol has failed for at least one of a second threshold number of failed attempts or a second threshold duration, the second threshold number of failed attempts being greater than the first threshold number of failed attempts, the second threshold duration being greater than the first threshold duration; and declaring a radio link failure (RLF) upon the determination that the transmission based on the LBT protocol has failed for at least one of the second threshold number of failed attempts or the second threshold duration.

Any of the above first example methods, wherein the report is sent as part of a set of reports, each report in the set of reports being sent periodically to the first base station to inform the first base station of an availability of the first unlicensed frequency channel.

Any of the above first example methods, wherein the determining, for one or more attempts of the LBT protocol, whether each attempt is a failed attempt or a successful attempt comprises periodically performing the LBT protocol when no transmission is available to send.

Any of the above first example methods, wherein periodically performing the LBT protocol is based on a first periodicity for a LBT protocol attempt during a transmission opportunity contended for and provided by the first base station and a second periodicity for a LBT protocol attempt outside the transmission opportunity.

A first example apparatus for wireless communication, comprising: means for determining to send a transmission to a first base station on a first unlicensed frequency channel of an unlicensed frequency spectrum; means for determining, for one or more attempts of a listen before talk (LBT) protocol, whether each attempt is a failed attempt or a successful attempt; means for determining that the first unlicensed frequency channel is one of: unavailable based on the LBT protocol failing due to at least one of a number of failed attempts exceeding a first threshold number of failed attempts or a duration of failed attempts exceeding a first threshold duration, or available based on the LBT protocol being successful for the transmission; and means for sending a report to the first base station indicating whether the first unlicensed frequency channel is unavailable or available through a unicast radio resource control (RRC) message or a medium access control (MAC) control element (CE).

The above first example apparatus, further comprising: means for maintaining one or more counters associated with the number of failed attempts or one or more timers associated with the duration of failed attempts based on the LBT protocol to transmit the transmission on the first unlicensed frequency channel; and means for resetting the one or more counters or the one or more timers a determination that the first unlicensed frequency channel is available for the transmission.

Any of the above first example apparatuses, wherein the first unlicensed frequency channel is provided by a first secondary cell of the first base station, and wherein the report is sent through a primary cell of the first base station, further comprising: means for receiving a command from the first base station indicating deactivation of the first secondary cell for communication through the first unlicensed frequency channel and activation of a second secondary cell for communication through a second unlicensed frequency channel of the unlicensed frequency spectrum, the command being received as a result of the report sent by the apparatus; and means for changing the first secondary cell of the first base station to the second secondary cell of the first base station for communication through the second unlicensed frequency channel upon receiving the command indicating the deactivation of the first secondary cell and the activation of the second secondary cell.

Any of the above first example apparatuses, further comprising means for moving in a handover from the first base station to a second base station, wherein the means for sending the report to the first base station is further configured to send the report to the second base station.

Any of the above first example apparatuses, further comprising: means for determining that the transmission based on the LBT protocol has failed for at least one of a second threshold number of failed attempts or a second threshold duration, the second threshold number of failed attempts being greater than the first threshold number of failed attempts, the second threshold duration being greater than the first threshold duration; and means for declaring a radio link failure (RLF) upon the determination that the transmission based on the LBT protocol has failed for at least one of the second threshold number of failed attempts or the second threshold duration.

A second example apparatus for wireless communication, comprising: a memory; and at least one processor coupled to the memory and configured to: determine to send a transmission to a first base station on a first unlicensed frequency channel of an unlicensed frequency spectrum; determine, for one or more attempts of a listen before talk (LBT) protocol, whether each attempt is a failed attempt or a successful attempt; determine that the first unlicensed frequency channel is one of: unavailable based on the LBT protocol failing due to at least one of a number of failed attempts exceeding a first threshold number of failed attempts or a duration of failed attempts exceeding a first threshold duration, or available based on at least one attempt of the LBT protocol being successful for the transmission; and send a report to the first base station indicating whether the first unlicensed frequency channel is unavailable or available through a unicast radio resource control (RRC) message or a medium access control (MAC) control element (CE).

The above second example apparatus, wherein the at least one processor coupled to the memory is further configured to: maintain one or more counters associated with the number of failed attempts or one or more timers associated with the duration of failed attempts based on the LBT protocol to transmit the transmission on the first unlicensed frequency channel; and reset the one or more counters or the one or more timers upon a determination that the first unlicensed frequency channel is available for the transmission.

Any of the above second example apparatuses, wherein the report includes at least one of a type of the transmission, an LBT type, a number of failed attempts, or a duration of failed attempts.

Any of the above second example apparatuses, wherein the report further includes at least one of a reference signal received power (RSRP), a reference signal received quality (RSRQ), a signal to interference plus noise ratio (SINR), a signal to noise ratio (SNR), a reference signal strength indication (RSSI), or a channel occupancy of a set of cells associated with the unlicensed frequency spectrum, the set of cells including a cell providing the first unlicensed frequency channel, wherein the set of cells include cells that were previously deactivated due to failures of previous transmission attempts based on the LBT protocol.

Any of the above second example apparatuses, wherein the first unlicensed frequency channel is provided by a first secondary cell of the first base station, and wherein the report is sent through a primary cell of the first base station, wherein the at least one processor coupled to the memory is further configured to: receive information from the first base station indicating deactivation of the first secondary cell for communication through the first unlicensed frequency channel and activation of a second secondary cell for communication through a second unlicensed frequency channel of the unlicensed frequency spectrum, the information being received as a result of the report sent by the apparatus; and change the first secondary cell of the first base station to the second secondary cell of the first base station for communication through the second unlicensed frequency channel upon receiving the information indicating the deactivation of the first secondary cell and the activation of the second secondary cell.

Any of the above second example apparatuses, wherein the at least one processor coupled to the memory is further configured to: move in a handover from the first base station to a second base station; and send the report to the second base station.

A second example method of wireless communication of a wireless device at a first base station, comprising: determining a failure of a listen before talk (LBT) protocol for a transmission from a user equipment (UE) to the first base station through an unlicensed frequency spectrum, wherein the determining the failure of the LBT protocol for the transmission from the UE comprises: receiving a report from the UE indicating the failure of the LBT protocol for the transmission from the UE through the unlicensed frequency spectrum; and determining the failure of the LBT protocol for the transmission from the UE based on the received report; and performing, based on the determination of the failure of the LBT protocol for the transmission from the UE, one of changing a secondary cell at the first base station for the UE for communication through the unlicensed frequency spectrum or handing over the UE to a primary cell at a second base station for communication through the unlicensed frequency spectrum.

It is understood that the specific order or hierarchy of blocks in the processes / flowcharts disclosed is an illustration of example approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C.

## Claims

1. A method of wireless communication at a user equipment, UE (104, 404, 504, 702/702', 1050), comprising:
determining (508, 602) to send a transmission to a first base station (102/180, 402, 502, 750, 1002/1002') on a first unlicensed frequency channel of an unlicensed frequency spectrum;
determining (510, 604), for one or more attempts of a listen before talk, LBT, protocol, whether each attempt is a failed attempt or a successful attempt;
determining (512, 606) that the first unlicensed frequency channel is one of:
unavailable based on the LBT protocol failing due to at least one of a number of failed attempts exceeding a first threshold number of failed attempts or a duration of failed attempts exceeding a first threshold duration, or
available based on at least one attempt of the LBT protocol being successful for the transmission; and
sending (420, 516, 610, 652) a report to the first base station (102/180, 402, 502, 750, 1002/1002') indicating whether the first unlicensed frequency channel is unavailable or available through a unicast radio resource control, RRC, message or a medium access control, MAC, control element, CE, wherein the report includes at least one of an identification of a cell providing the first unlicensed frequency channel, a type of the transmission, an LBT type, the number of failed attempts, or the duration of failed attempts.

2. The method of claim 1, wherein the transmission is one of a scheduling request, SR, a random access channel, RACH, procedure, data on a physical uplink shared channel, PUSCH, or sounding reference signals, SRS, on the first unlicensed frequency channel.

3. The method of claim 1, further comprising:
maintaining (514, 608) one or more counters associated with the number of failed attempts or one or more timers associated with the duration of failed attempts based on the LBT protocol to transmit the transmission on the first unlicensed frequency channel; and
resetting the one or more counters or the one or more timers upon a determination that the first unlicensed frequency channel is available for the transmission;
wherein the maintaining (514, 608) the one or more counters or the one or more timers preferably comprises maintaining (616) a first counter or a first timer for a first type of the transmission and a second counter or a second timer for a second type of the transmission, the first type of the transmission being inside a transmission opportunity contended for and provided by the first base station (102/180, 402, 502, 750, 1002/1002'), the second type of the transmission being outside the transmission opportunity contended for and provided by the first base station (102/180, 402, 502, 750, 1002/1002'), the second type of the transmission being transmitted within a transmission opportunity contended for by the UE (104, 404, 504, 702/702', 1050);
wherein the maintaining (514, 608) the one or more counters or the one or more timers optionally comprises maintaining (618) separate counters or separate timers for each access priority of a set of access priorities associated with the transmission wherein, preferably, the maintaining (618) separate counters or separate timers for each access priority of the set of access priorities comprises resetting counters or timers for higher access priorities when a counter or a timer for an access priority is reset.

4. The method of claim 1, wherein the first threshold number of failed attempts is less than a number of failed attempts that triggers a radio link failure, RLF, for a cell corresponding to the first unlicensed frequency channel, and the first threshold duration is less than a duration that triggers an RLF for the cell corresponding to the first unlicensed frequency channel.

5. The method of claim 1,
wherein the report further includes a weighted sum of the number of failed attempts and the duration of failed attempts; or
the method of claim 1, wherein the report further includes at least one of a reference signal received power, RSRP, a reference signal received quality, RSRQ, a signal to interference plus noise ratio, SINR, a signal to noise ratio, SNR, a reference signal strength indication, RSSI, or a channel occupancy of a set of cells associated with the unlicensed frequency spectrum, the set of cells including a cell providing the first unlicensed frequency channel;
and wherein the set of cells preferably includes cells that were previously deactivated due to failures of previous transmission attempts based on the LBT protocol.

6. The method of claim 1, wherein the first unlicensed frequency channel is provided by a first secondary cell of the first base station (102/180, 402, 502, 750, 1002/1002'), and wherein the report is sent through a primary cell of the first base station (102/180, 402, 502, 750, 1002/1002');
the method optionally further comprising:
receiving (524, 612) a command from the first base station (102/180, 402, 502, 750, 1002/1002') indicating deactivation of the first secondary cell for communication through the first unlicensed frequency channel and activation of a second secondary cell for communication through a second unlicensed frequency channel of the unlicensed frequency spectrum, the command being received as a result of the report sent by the UE (104, 404, 504, 702/702', 1050); and
changing (526, 612) the first secondary cell of the first base station (102/180, 402, 502, 750, 1002/1002') to the second secondary cell of the first base station (102/180, 402, 502, 750, 1002/1002') for communication through the second unlicensed frequency channel upon receiving the command indicating the deactivation of the first secondary cell and the activation of the second secondary cell.

7. The method of claim 1, further comprising moving in a handover from the first base station (102/180, 402, 502, 750, 1002/1002') to a second base station and sending the report to the second base station.

8. The method of claim 1, further comprising:
determining (528, 614) that the transmission based on the LBT protocol has failed for at least one of a second threshold number of failed attempts or a second threshold duration, the second threshold number of failed attempts being greater than the first threshold number of failed attempts, the second threshold duration being greater than the first threshold duration; and
declaring (528, 614) a radio link failure, RLF, upon the determination that the transmission based on the LBT protocol has failed for at least one of the second threshold number of failed attempts or the second threshold duration.

9. The method of claim 1, wherein the report is sent as part of a set of reports, each report in the set of reports being sent periodically to the first base station (102/180, 402, 502, 750, 1002/1002') to inform the first base station (102/180, 402, 502, 750, 1002/1002') of an availability of the first unlicensed frequency channel.

10. The method of claim 1, wherein the determining, for one or more attempts of the LBT protocol, whether each attempt is a failed attempt or a successful attempt comprises periodically performing the LBT protocol when no transmission is available to send;
wherein periodically performing the LBT protocol is preferably based on a first periodicity for a LBT protocol attempt during a transmission opportunity contended for and provided by the first base station (102/180, 402, 502, 750, 1002/1002') and a second periodicity for a LBT protocol attempt outside the transmission opportunity.

11. An apparatus for wireless communication at a user equipment, UE (104, 404, 504, 702/702', 1050), the apparatus comprising:
means for determining to send a transmission to a first base station (102/180, 402, 502, 750, 1002/1002') on a first unlicensed frequency channel of an unlicensed frequency spectrum;
means for determining, for one or more attempts of a listen before talk, LBT, protocol, whether each attempt is a failed attempt or a successful attempt;
means for determining that the first unlicensed frequency channel is one of:
unavailable based on the LBT protocol failing due to at least one of a number of failed attempts exceeding a first threshold number of failed attempts or a duration of failed attempts exceeding a first threshold duration, or
available based on the LBT protocol being successful for the transmission; and
means for sending a report to the first base station (102/180, 402, 502, 750, 1002/1002') indicating whether the first unlicensed frequency channel is unavailable or available through a unicast radio resource control, RRC, message or a medium access control, MAC, control element, CE, wherein the report includes at least one of an identification of a cell providing the first unlicensed frequency channel, a type of the transmission, an LBT type, the number of failed attempts, or the duration of failed attempts.

12. The apparatus for wireless communication according to claim 11, further comprising means for carrying out the method of any of claims 2 to 10.

13. A method of wireless communication of a wireless device at a first base station (102/180, 402, 502, 750, 1002/1002'), comprising:
determining (904) a failure of a listen before talk, LBT, protocol for a transmission from a user equipment, UE (104, 404, 504, 702/702', 1050) to the first base station (102/180, 402, 502, 750, 1002/1002') through an unlicensed frequency spectrum, wherein the determining the failure of the LBT protocol for the transmission from the UE (104, 404, 504, 702/702', 1050) comprises:
receiving (420, 516, 905) a report from the UE (104, 404, 504, 702/702', 1050) indicating the failure of the LBT protocol for the transmission from the UE (104, 404, 504, 702/702', 1050) through the unlicensed frequency spectrum, wherein the report includes at least one of an identification of a cell providing the first unlicensed frequency channel, a type of the transmission, an LBT type, the number of failed attempts, or the duration of failed attempts; and
determining (520) the failure of the LBT protocol for the transmission from the UE (104, 404, 504, 702/702', 1050) based on the received report; and
performing (522, 906), based on the determination of the failure of the LBT protocol for the transmission from the UE (104, 404, 504, 702/702', 1050), one of changing a secondary cell at the first base station (102/180, 402, 502, 750, 1002/1002') for the UE (104, 404, 504, 702/702', 1050) for communication through the unlicensed frequency spectrum or handing over the UE (104, 404, 504, 702/702', 1050) to a primary cell at a second base station for communication through the unlicensed frequency spectrum.

14. An apparatus for wireless communication at a first base station (102/180, 402, 502, 750, 1002/1002'), the apparatus comprising:
means for determining a failure of a listen before talk, LBT, protocol for a transmission from a user equipment, UE (104, 404, 504, 702/702', 1050) to the first base station (102/180, 402, 502, 750, 1002/1002') through an unlicensed frequency spectrum, wherein the means for determining the failure of the LBT protocol for the transmission from the UE (104, 404, 504, 702/702', 1050) comprises:
means for receiving a report from the UE (104, 404, 504, 702/702', 1050) indicating the failure of the LBT protocol for the transmission from the UE (104, 404, 504, 702/702', 1050) through the unlicensed frequency spectrum, wherein the report includes at least one of an identification of a cell providing the first unlicensed frequency channel, a type of the transmission, an LBT type, the number of failed attempts, or the duration of failed attempts; and
means for determining the failure of the LBT protocol for the transmission from the UE (104, 404, 504, 702/702', 1050) based on the received report; and
means for performing, based on the determination of the failure of the LBT protocol for the transmission from the UE (104, 404, 504, 702/702', 1050), one of changing a secondary cell at the first base station (102/180, 402, 502, 750, 1002/1002') for the UE (104, 404, 504, 702/702', 1050) for communication through the unlicensed frequency spectrum or handing over the UE (104, 404, 504, 702/702', 1050) to a primary cell at a second base station for communication through the unlicensed frequency spectrum.

15. A computer program comprising instructions which, when the program is executed by a user equipment, cause the user equipment to carry out the steps of the method of any claims 1 to 10, or when the program is executed by a base station, cause the base station to carry out the steps of the method of claim 13.

## Patentansprüche

1. Verfahren zur drahtlosen Kommunikation an einem Benutzergerät, UE (104, 404, 504, 702/702', 1050), umfassend:
Bestimmen (508, 602), eine Übertragung an eine erste Basisstation (102/180, 402, 502, 750, 1002/1002') auf einem ersten unlizenzierten Frequenzkanal eines unlizenzierten Frequenzspektrums zu senden;
Bestimmen (510, 604), für einen oder mehrere Versuche eines Listen-before-Talk-, LBT-, Protokolls, ob jeder Versuch ein fehlgeschlagener Versuch oder ein erfolgreicher Versuch ist;
Bestimmen (512, 606), dass der erste unlizenzierte Frequenzkanal einer ist von:
unverfügbar basierend darauf, dass das LBT-Protokoll aufgrund einer Anzahl von fehlgeschlagenen Versuchen, die eine erste Schwellenanzahl von fehlgeschlagenen Versuchen überschreitet, und/oder einer Dauer von fehlgeschlagenen Versuchen, die eine erste Schwellendauer überschreitet, fehlgeschlagen ist, oder
verfügbar basierend darauf, dass mindestens ein Versuch des LBT-Protokolls für die Übertragung erfolgreich ist; und
Senden (420, 516, 610, 652) eines Berichts an die erste Basisstation (102/180, 402, 502, 750, 1002/1002'), der angibt, ob der erste unlizenzierte Frequenzkanal durch eine Unicast-Funkressourcensteuerungs-, RRC-, Nachricht oder ein Medienzugriffssteuerungs-, MAC-, Steuerelement, CE, unverfügbar oder verfügbar ist, wobei der Bericht eine Identifikation einer Zelle, die den ersten unlizenzierten Frequenzkanal bereitstellt, und/oder einen Typ der Übertragung und/oder einen LBT-Typ und/oder die Anzahl von fehlgeschlagenen Versuchen und/oder die Dauer von fehlgeschlagenen Versuchen beinhaltet.

2. Verfahren nach Anspruch 1, wobei die Übertragung eine von einer Planungsanforderungs-, SR-, einer Direktzugriffskanal-, RACH-, Prozedur, Daten auf einem gemeinsam genutzten physikalischen Uplink-Kanal, PUSCH, oder Sondierungsreferenzsignalen, SRS, auf dem ersten unlizenzierten Frequenzkanal ist.

3. Verfahren nach Anspruch 1, ferner umfassend:
Aufrechterhalten (514, 608) eines oder mehrerer Zähler, die der Anzahl von fehlgeschlagenen Versuchen zugeordnet sind, oder eines oder mehrerer Zeitgeber, die der Dauer von fehlgeschlagenen Versuchen zugeordnet sind, basierend auf dem LBT-Protokoll, um die Übertragung auf dem ersten unlizenzierten Frequenzkanal zu übertragen; und
Zurücksetzen des einen oder der mehreren Zähler oder des einen oder der mehreren Zeitgeber bei einer Bestimmung, dass der erste unlizenzierte Frequenzkanal für die Übertragung verfügbar ist;
wobei das Aufrechterhalten (514, 608) des einen oder der mehreren Zähler oder des einen oder der mehreren Zeitgeber vorzugsweise das Aufrechterhalten (616) eines ersten Zählers oder eines ersten Zeitgebers für einen ersten Typ der Übertragung und eines zweiten Zählers oder eines zweiten Zeitgebers für einen zweiten Typ der Übertragung umfasst, wobei der erste Typ der Übertragung innerhalb einer Übertragungsmöglichkeit liegt, die von der ersten Basisstation (102/180, 402, 502, 750, 1002/1002') bestritten und bereitgestellt wird, wobei der zweite Typ der Übertragung außerhalb der Übertragungsmöglichkeit liegt, die von der ersten Basisstation (102/180, 402, 502, 750, 1002/1002') bestritten und bereitgestellt wird, wobei der zweite Typ der Übertragung innerhalb einer Übertragungsmöglichkeit übertragen wird, die von dem UE (104, 404, 504, 702/702', 1050) bestritten wird;
wobei das Aufrechterhalten (514, 608) des einen oder der mehreren Zähler oder des einen oder der mehreren Zeitgeber optional das Aufrechterhalten (618) separater Zähler oder separater Zeitgeber für jede Zugriffspriorität eines Satzes von Zugriffsprioritäten umfasst, die der Übertragung zugeordnet sind, wobei vorzugsweise das Aufrechterhalten (618) separater Zähler oder separater Zeitgeber für jede Zugriffspriorität des Satzes von Zugriffsprioritäten das Zurücksetzen von Zählern oder Zeitgebern für höhere Zugriffsprioritäten umfasst, wenn ein Zähler oder ein Zeitgeber für eine Zugriffspriorität zurückgesetzt wird.

4. Verfahren nach Anspruch 1, wobei die erste Schwellenanzahl von fehlgeschlagenen Versuchen kleiner als eine Anzahl von fehlgeschlagenen Versuchen ist, die einen Funkverbindungsfehler, RLF, für eine Zelle auslöst, die dem ersten unlizenzierten Frequenzkanal entspricht, und die erste Schwellendauer kleiner als eine Dauer ist, die einen RLF für die Zelle auslöst, die dem ersten unlizenzierten Frequenzkanal entspricht.

5. Verfahren nach Anspruch 1,
wobei der Bericht ferner eine gewichtete Summe der Anzahl von fehlgeschlagenen Versuchen und der Dauer von fehlgeschlagenen Versuchen beinhaltet; oder
Verfahren nach Anspruch 1, wobei der Bericht ferner mindestens eines von einer Referenzsignalempfangsleistung, RSRP, einer Referenzsignalempfangsqualität, RSRQ, einem Signal-zu-Interferenz-plus-Rauschen-Verhältnis, SINR, einem Signal-zu-Rauschen-Verhältnis, SNR, einer Referenzsignalstärkeanzeige, RSSI, oder einer Kanalbelegung eines Satzes von Zellen beinhaltet, die dem unlizenzierten Frequenzspektrum zugeordnet sind, wobei der Satz von Zellen eine Zelle beinhaltet, die den ersten unlizenzierten Frequenzkanal bereitstellt;
und wobei der Satz von Zellen vorzugsweise Zellen beinhaltet, die zuvor aufgrund von Fehlern von vorherigen Übertragungsversuchen basierend auf dem LBT-Protokoll deaktiviert wurden.

6. Verfahren nach Anspruch 1, wobei der erste unlizenzierte Frequenzkanal durch eine erste sekundäre Zelle der ersten Basisstation (102/180, 402, 502, 750, 1002/1002') bereitgestellt wird, und wobei der Bericht durch eine primäre Zelle der ersten Basisstation (102/180, 402, 502, 750, 1002/1002') gesendet wird;
wobei das Verfahren optional ferner umfasst:
Empfangen (524, 612) eines Befehls von der ersten Basisstation (102/180, 402, 502, 750, 1002/1002'), der Deaktivierung der ersten sekundären Zelle zur Kommunikation durch den ersten unlizenzierten Frequenzkanal und Aktivierung einer zweiten sekundären Zelle zur Kommunikation durch einen zweiten unlizenzierten Frequenzkanal des unlizenzierten Frequenzspektrums anzeigt, wobei der Befehl als ein Ergebnis des durch das UE (104, 404, 504, 702/702', 1050) gesendeten Berichts empfangen wird; und
Wechseln (526, 612) der ersten sekundären Zelle der ersten Basisstation (102/180, 402, 502, 750, 1002/1002') zur zweiten sekundären Zelle der ersten Basisstation (102/180, 402, 502, 750, 1002/1002') zur Kommunikation durch den zweiten unlizenzierten Frequenzkanal nach Empfangen des Befehls, der die Deaktivierung der ersten sekundären Zelle und die Aktivierung der zweiten sekundären Zelle anzeigt.

7. Verfahren nach Anspruch 1, ferner umfassend Bewegen in einem Handover von der ersten Basisstation (102/180, 402, 502, 750, 1002/1002') zu einer zweiten Basisstation und Senden des Berichts an die zweite Basisstation.

8. Verfahren nach Anspruch 1, ferner umfassend:
Bestimmen (528, 614), dass die Übertragung basierend auf dem LBT-Protokoll für eine zweite Schwellenanzahl von fehlgeschlagenen Versuchen und/oder eine zweite Schwellendauer fehlgeschlagen ist, wobei die zweite Schwellenanzahl von fehlgeschlagenen Versuchen größer als die erste Schwellenanzahl von fehlgeschlagenen Versuchen ist, wobei die zweite Schwellendauer größer als die erste Schwellendauer ist; und
Deklarieren (528, 614) eines Funkverbindungsfehlers, RLF, bei der Bestimmung, dass die Übertragung basierend auf dem LBT-Protokoll für die zweite Schwellenanzahl von fehlgeschlagenen Versuchen und/oder die zweite Schwellendauer fehlgeschlagen ist.

9. Verfahren nach Anspruch 1, wobei der Bericht als Teil eines Satzes von Berichten gesendet wird, wobei jeder Bericht in dem Satz von Berichten periodisch an die erste Basisstation (102/180, 402, 502, 750, 1002/1002') gesendet wird, um die erste Basisstation (102/180, 402, 502, 750, 1002/1002') über eine Verfügbarkeit des ersten unlizenzierten Frequenzkanals zu informieren.

10. Verfahren nach Anspruch 1, wobei das Bestimmen, für einen oder mehrere Versuche des LBT-Protokolls, ob jeder Versuch ein fehlgeschlagener Versuch oder ein erfolgreicher Versuch ist, periodisches Durchführen des LBT-Protokolls umfasst, wenn keine Übertragung zum Senden verfügbar ist;
wobei das periodische Durchführen des LBT-Protokolls vorzugsweise auf einer ersten Periodizität für einen LBT-Protokollversuch während einer Übertragungsmöglichkeit, die von der ersten Basisstation (102/180, 402, 502, 750, 1002/1002') bestritten und bereitgestellt wird, und einer zweiten Periodizität für einen LBT-Protokollversuch außerhalb der Übertragungsmöglichkeit basiert.

11. Vorrichtung zur drahtlosen Kommunikation an einem Benutzergerät, UE (104, 404, 504, 702/702', 1050), die Vorrichtung umfassend:
Mittel zum Bestimmen, eine Übertragung an eine erste Basisstation (102/180, 402, 502, 750, 1002/1002') auf einem ersten unlizenzierten Frequenzkanal eines unlizenzierten Frequenzspektrums zu senden;
Mittel zum Bestimmen, für einen oder mehrere Versuche eines Listen-before-Talk-, LBT-, Protokolls, ob jeder Versuch ein fehlgeschlagener Versuch oder ein erfolgreicher Versuch ist;
Mittel zum Bestimmen, dass der erste unlizenzierte Frequenzkanal einer ist von:
unverfügbar basierend darauf, dass das LBT-Protokoll aufgrund einer Anzahl von fehlgeschlagenen Versuchen, die eine erste Schwellenanzahl von fehlgeschlagenen Versuchen überschreitet, und/oder einer Dauer von fehlgeschlagenen Versuchen, die eine erste Schwellendauer überschreitet, fehlgeschlagen ist, oder
verfügbar basierend darauf, dass das LBT-Protokoll für die Übertragung erfolgreich ist; und
Mittel zum Senden eines Berichts an die erste Basisstation (102/180, 402, 502, 750, 1002/1002'), der angibt, ob der erste unlizenzierte Frequenzkanal durch eine Unicast-Funkressourcensteuerungs-, RRC-, Nachricht oder ein Medienzugriffssteuerungs-, MAC-, Steuerelement, CE, unverfügbar oder verfügbar ist, wobei der Bericht eine Identifikation einer Zelle, die den ersten unlizenzierten Frequenzkanal bereitstellt, und/oder einen Typ der Übertragung und/oder einen LBT-Typ und/oder die Anzahl von fehlgeschlagenen Versuchen und/oder die Dauer von fehlgeschlagenen Versuchen beinhaltet.

12. Vorrichtung zur drahtlosen Kommunikation nach Anspruch 11, ferner umfassend Mittel zum Ausführen des Verfahrens nach einem der Ansprüche 2 bis 10.

13. Verfahren zur drahtlosen Kommunikation einer drahtlosen Vorrichtung an einer ersten Basisstation (102/180, 402, 502, 750, 1002/1002'), umfassend:
Bestimmen (904) eines Fehlschlags eines Listen-before-Talk-, LBT-, Protokolls für eine Übertragung von einem Benutzergerät, UE (104, 404, 504, 702/702', 1050) an die erste Basisstation (102/180, 402, 502, 750, 1002/1002') durch ein unlizenziertes Frequenzspektrum, wobei das Bestimmen des Fehlschlags des LBT-Protokolls für die Übertragung von dem UE (104, 404, 504, 702/702', 1050) umfasst:
Empfangen (420, 516, 905) eines Berichts von dem UE (104, 404, 504, 702/702', 1050), der den Fehlschlag des LBT-Protokolls für die Übertragung von dem UE (104, 404, 504, 702/702', 1050) durch das unlizenzierte Frequenzspektrum angibt, wobei der Bericht eine Identifikation einer Zelle, die den ersten unlizenzierten Frequenzkanal bereitstellt, und/oder einen Typ der Übertragung und/oder einen LBT-Typ und/oder die Anzahl von fehlgeschlagenen Versuchen und/oder die Dauer von fehlgeschlagenen Versuchen beinhaltet; und
Bestimmen (520) des Fehlschlags des LBT-Protokolls für die Übertragung von dem UE (104, 404, 504, 702/702', 1050) basierend auf dem empfangenen Bericht; und
Durchführen (522, 906), basierend auf der Bestimmung des Fehlschlags des LBT-Protokolls für die Übertragung von dem UE (104, 404, 504, 702/702', 1050), eines von Wechseln einer sekundären Zelle an der ersten Basisstation (102/180, 402, 502, 750, 1002/1002') für das UE (104, 404, 504, 702/702', 1050) zur Kommunikation durch das unlizenzierte Frequenzspektrum oder Übergeben des UE (104, 404, 504, 702/702', 1050) an eine primäre Zelle an einer zweiten Basisstation zur Kommunikation durch das unlizenzierte Frequenzspektrum.

14. Vorrichtung zur drahtlosen Kommunikation an einer ersten Basisstation (102/180, 402, 502, 750, 1002/1002'), die Vorrichtung umfassend:
Mittel zum Bestimmen eines Fehlschlags eines Listen-before-Talk-, LBT-, Protokolls für eine Übertragung von einem Benutzergerät, UE (104, 404, 504, 702/702', 1050) an die erste Basisstation (102/180, 402, 502, 750, 1002/1002') durch ein unlizenziertes Frequenzspektrum, wobei das Mittel zum Bestimmen des Fehlschlags des LBT-Protokolls für die Übertragung von dem UE (104, 404, 504, 702/702', 1050) umfasst:
Mittel zum Empfangen eines Berichts von dem UE (104, 404, 504, 702/702', 1050), der den Fehlschlag des LBT-Protokolls für die Übertragung von dem UE (104, 404, 504, 702/702', 1050) durch das unlizenzierte Frequenzspektrum angibt, wobei der Bericht eine Identifikation einer Zelle, die den ersten unlizenzierten Frequenzkanal bereitstellt, und/oder einen Typ der Übertragung und/oder einen LBT-Typ und/oder die Anzahl von fehlgeschlagenen Versuchen und/oder die Dauer von fehlgeschlagenen Versuchen beinhaltet; und
Mittel zum Bestimmen des Fehlschlags des LBT-Protokolls für die Übertragung von dem UE (104, 404, 504, 702/702', 1050) basierend auf dem empfangenen Bericht; und
Mittel zum Durchführen, basierend auf der Bestimmung des Fehlschlags des LBT-Protokolls für die Übertragung von dem UE (104, 404, 504, 702/702', 1050), eines von Wechseln einer sekundären Zelle an der ersten Basisstation (102/180, 402, 502, 750, 1002/1002') für das UE (104, 404, 504, 702/702', 1050) zur Kommunikation durch das unlizenzierte Frequenzspektrum oder Übergeben des UE (104, 404, 504, 702/702', 1050) an eine primäre Zelle an einer zweiten Basisstation zur Kommunikation durch das unlizenzierte Frequenzspektrum.

15. Computerprogramm, umfassend Anweisungen, die, wenn das Programm von einem Benutzergerät ausgeführt wird, das Benutzergerät veranlassen, die Schritte des Verfahrens nach einem der Ansprüche 1 bis 10 auszuführen, oder, wenn das Programm von einer Basisstation ausgeführt wird, die Basisstation veranlassen, die Schritte des Verfahrens nach Anspruch 13 auszuführen.

## Revendications

1. Un procédé de communication sans fil au niveau **d'un** équipement utilisateur, UE (104, 404, 504, 702/702', 1050), comprenant :
la détermination (508, 602) **d'envoyer** une transmission à une première station de base (102/180, 402, 502, 750, 1002/1002') sur un premier canal de fréquence sans licence d'un spectre de fréquences sans licence ;
la détermination (510, 604), pour une ou plusieurs tentatives d'un protocole d'écoute avant d'émettre, LBT, si chaque tentative est une tentative échouée ou une tentative réussie ;
la détermination (512, 606) que le premier canal de fréquence sans licence est l'un parmi :
indisponible, sur la base de l'échec du protocole LBT en raison d'au moins un parmi un nombre de tentatives échouées dépassant un premier nombre de seuil de tentatives échouées ou une durée de tentatives échouées dépassant une première durée de seuil, ou
disponible, sur la base **d'au** moins une tentative du protocole LBT qui est réussie pour la transmission ; et
l'envoi (420, 516, 610, 652) d'un rapport à la première station de base (102/180, 402, 502, 750, 1002/1002') indiquant si le premier canal de fréquence sans licence est indisponible ou disponible via un message de contrôle de ressource radio, RRC, unicast ou un élément de contrôle, CE, de contrôle d'accès au support, MAC, dans lequel le rapport comporte au moins un parmi une identification d'une cellule délivrant le premier canal de fréquence sans licence, un type de la transmission, un type LBT, le nombre de tentatives échouées, ou la durée de tentatives échouées.

2. Le procédé selon la revendication 1, dans lequel la transmission est l'un parmi une requête de planification, SR, une procédure de canal d'accès aléatoire, RACH, des données sur un canal physique partagé de liaison montante, PUSCH, ou des signaux de référence de sondage, SRS, sur le premier canal de fréquence sans licence.

3. Le procédé selon la revendication 1, comprenant en outre :
le maintien (514, 608) d'un ou plusieurs compteurs associés au nombre de tentatives échouées ou d'une ou plusieurs temporisations associées à la durée de tentatives échouées, sur la base du protocole LBT pour transmettre la transmission sur le premier canal de fréquence sans licence ; et
la réinitialisation des un ou plusieurs compteurs ou des une ou plusieurs temporisations lors d'une détermination que le premier canal de fréquence sans licence est disponible pour la transmission ;
dans lequel le maintien (514, 608) des un ou plusieurs compteurs ou des une ou plusieurs temporisations comprend de préférence le maintien (616) d'un premier compteur ou d'une première temporisation pour un premier type de la transmission et d'un second compteur ou d'une seconde temporisation pour un second type de la transmission, le premier type de la transmission étant à l'intérieur d'une opportunité de transmission disputée et délivrée par la première station de base (102/180, 402, 502, 750, 1002/1002'), le second type de la transmission étant à l'extérieur de l'opportunité de transmission disputée et délivrée par la première station de base (102/180, 402, 502, 750, 1002/1002'), le second type de la transmission étant transmis à l'intérieur d'une opportunité de transmission disputée par l'UE (104, 404, 504, 702/702', 1050) ;
dans lequel le maintien (514, 608) des un ou plusieurs compteurs ou des une ou plusieurs temporisations comprend facultativement le maintien (618) de compteurs distincts ou de temporisations distinctes pour chaque priorité d'accès d'un ensemble de priorités d'accès associé à la transmission, dans lequel, de préférence, le maintien (618) de compteurs distincts ou de temporisations distinctes pour chaque priorité d'accès de l'ensemble de priorités d'accès comprend la réinitialisation de compteurs ou de temporisations pour des priorités d'accès plus élevées lorsqu'un compteur ou une temporisation pour une priorité d'accès est réinitialisé.

4. Le procédé selon la revendication 1, dans lequel le premier nombre de seuil de tentatives échouées est inférieur à un nombre de tentatives échouées qui déclenche une défaillance de liaison radio, RLF, pour une cellule correspondant au premier canal de fréquence sans licence, et la première durée de seuil est inférieure à une durée qui déclenche une RLF pour la cellule correspondant au premier canal de fréquence sans licence.

5. Le procédé selon la revendication 1,
dans lequel le rapport comporte en outre une somme pondérée du nombre de tentatives échouées et de la durée de tentatives échouées ; ou
le procédé selon la revendication 1, dans lequel le rapport comporte en outre au moins l'un parmi une puissance reçue de signal de référence, RSRP, une qualité reçue de signal de référence, RSRQ, un rapport signal/interférence plus bruit, SINR, un rapport signal/bruit, SNR, une indication d'intensité de signal de référence, RSSI, ou une occupation de canal d'un ensemble de cellules associées au spectre de fréquences sans licence, l'ensemble de cellules comportant une cellule fournissant le premier canal de fréquence sans licence ;
et dans lequel l'ensemble de cellules comporte de préférence des cellules qui ont été précédemment désactivées en raison d'échecs de tentatives de transmission précédentes basées sur le protocole LBT.

6. Le procédé selon la revendication 1, dans lequel le premier canal de fréquence sans licence est délivré par une première cellule secondaire de la première station de base (102/180, 402, 502, 750, 1002/1002'), et dans lequel le rapport est envoyé par l'intermédiaire d'une cellule primaire de la première station de base (102/180, 402, 502, 750, 1002/1002') ;
le procédé comprenant en outre facultativement :
la réception (524, 612) d'une commande à partir de la première station de base (102/180, 402, 502, 750, 1002/1002') indiquant une désactivation de la première cellule secondaire pour une communication au moyen du premier canal de fréquence sans licence et une activation d'une seconde cellule secondaire pour une communication au moyen d'un second canal de fréquence sans licence du spectre de fréquences sans licence, la commande étant reçue à la suite du rapport envoyé par l'UE (104, 404, 504, 702/702', 1050) ; et
le changement (526, 612) de la première cellule secondaire de la première station de base (102/180, 402, 502, 750, 1002/1002') à la seconde cellule secondaire de la première station de base (102/180, 402, 502, 750, 1002/1002') pour une communication au moyen du second canal de fréquence sans licence à la réception de la commande indiquant la désactivation de la première cellule secondaire et l'activation de la seconde cellule secondaire.

7. Le procédé selon la revendication 1, comprenant en outre un déplacement dans un handover de la première station de base (102/180, 402, 502, 750, 1002/1002') à une seconde station de base et l'envoi du rapport à la seconde station de base.

8. Le procédé selon la revendication 1, comprenant en outre :
la détermination (528, 614) que la transmission basée sur le protocole LBT a échoué pour au moins un parmi un second nombre de seuil de tentatives échouées ou une seconde durée de seuil, le second nombre de seuil de tentatives échouées étant supérieur au premier nombre de seuil de tentatives échouées, la seconde durée de seuil étant supérieure à la première durée de seuil ; et
la déclaration (528, 614) d'une défaillance de liaison radio, RLF, lors de la détermination que la transmission basée sur le protocole LBT a échoué pour au moins l'un parmi le second nombre de seuil de tentatives échouées ou la seconde durée de seuil.

9. Le procédé selon la revendication 1, dans lequel le rapport est envoyé en tant que partie d'un ensemble de rapports, chaque rapport de l'ensemble de rapports étant envoyé périodiquement à la première station de base (102/180, 402, 502, 750, 1002/1002') pour informer la première station de base (102/180, 402, 502, 750, 1002/1002') d'une disponibilité du premier canal de fréquence sans licence.

10. Le procédé selon la revendication 1, dans lequel la détermination, pour une ou plusieurs tentatives du protocole LBT, si chaque tentative est une tentative échouée ou une tentative réussie comprend la réalisation périodique du protocole LBT lorsqu'aucune transmission n'est disponible pour l'envoi ;
dans lequel la réalisation périodique du protocole LBT est de préférence basée sur une première périodicité pour une tentative de protocole LBT pendant une opportunité de transmission disputée et délivrée par la première station de base (102/180, 402, 502, 750, 1002/1002') et une seconde périodicité pour une tentative de protocole LBT en dehors de l'opportunité de transmission.

11. Un appareil pour la communication sans fil au niveau d'un équipement utilisateur, UE (104, 404, 504, 702/702', 1050), l'appareil comprenant :
un moyen pour déterminer d'envoyer une transmission à une première station de base (102/180, 402, 502, 750, 1002/1002') sur un premier canal de fréquence sans licence d'un spectre de fréquences sans licence ;
un moyen pour déterminer, pour une ou plusieurs tentatives **d'un** protocole **d'écoute** avant **d'émettre,** LBT, si chaque tentative est une tentative échouée ou une tentative réussie ;
un moyen pour déterminer que le premier canal de fréquence sans licence est l'un parmi :
indisponible, sur la base de l'échec du protocole LBT en raison d'au moins un parmi un nombre de tentatives échouées dépassant un premier nombre de seuil de tentatives échouées ou une durée de tentatives échouées dépassant une première durée de seuil, ou
disponible, sur la base du protocole LBT qui est réussi pour la transmission ; et
un moyen pour envoyer un rapport à la première station de base (102/180, 402, 502, 750, 1002/1002') indiquant si le premier canal de fréquence sans licence est indisponible ou disponible via un message de contrôle de ressource radio, RRC, unicast ou un élément de contrôle, CE, de contrôle d'accès au support, MAC, dans lequel le rapport comporte au moins un parmi une identification d'une cellule délivrant le premier canal de fréquence sans licence, un type de la transmission, un type LBT, le nombre de tentatives échouées, ou la durée de tentatives échouées.

12. Un appareil pour la communication sans fil selon la revendication 11, comprenant en outre des moyens pour réaliser le procédé selon l'une des revendications 2 à 10.

13. Un procédé de communication sans fil d'un dispositif sans fil au niveau d'une première station de base (102/180, 402, 502, 750, 1002/1002'), comprenant :
la détermination (904) d'un échec d'un protocole d'écoute avant d'émettre, LBT, pour une transmission d'un équipement utilisateur, UE (104, 404, 504, 702/702', 1050) à la première station de base (102/180, 402, 502, 750, 1002/1002') par l'intermédiaire d'un spectre de fréquences sans licence, dans lequel la détermination de l'échec du protocole LBT pour la transmission à partir de l'UE (104, 404, 504, 702/702', 1050) comprend :
la réception (420, 516, 905) d'un rapport à partir de l'UE (104, 404, 504, 702/702', 1050) indiquant l'échec du protocole LBT pour la transmission à partir de l'UE (104, 404, 504, 702/702', 1050) par l'intermédiaire du spectre de fréquences sans licence, dans lequel le rapport comporte au moins un parmi une identification d'une cellule délivrant le premier canal de fréquence sans licence, un type de la transmission, un type LBT, le nombre de tentatives échouées, ou la durée de tentatives échouées ; et
la détermination (520) de l'échec du protocole LBT pour la transmission à partir de l'UE (104, 404, 504, 702/702', 1050), sur la base du rapport reçu ; et
la réalisation (522, 906), sur la base de la détermination de l'échec du protocole LBT pour la transmission à partir de l'UE (104, 404, 504, 702/702', 1050), d'un parmi le changement d'une cellule secondaire au niveau de la première station de base (102/180, 402, 502, 750, 1002/1002') pour l'UE (104, 404, 504, 702/702', 1050) pour une communication par l'intermédiaire du spectre de fréquences sans licence, ou le handover de l'UE (104, 404, 504, 702/702', 1050) vers une cellule primaire au niveau d'une seconde station de base pour la communication par l'intermédiaire du spectre de fréquences sans licence.

14. Un appareil pour la communication sans fil au niveau d'une première station de base (102/180, 402, 502, 750, 1002/1002'), l'appareil comprenant :
un moyen pour déterminer un échec d'un protocole d'écoute avant d'émettre, LBT, pour une transmission d'un équipement utilisateur, UE (104, 404, 504, 702/702', 1050) à la première station de base (102/180, 402, 502, 750, 1002/1002') par l'intermédiaire d'un spectre de fréquences sans licence, dans lequel le moyen pour la détermination de l'échec du protocole LBT pour la transmission à partir de l'UE (104, 404, 504, 702/702', 1050) comprend :
un moyen pour recevoir un rapport à partir de l'UE (104, 404, 504, 702/702', 1050) indiquant l'échec du protocole LBT pour la transmission à partir de l'UE (104, 404, 504, 702/702', 1050) par l'intermédiaire d'un spectre de fréquences sans licence, dans lequel le rapport comporte au moins un parmi une identification d'une cellule délivrant le premier canal de fréquence sans licence, un type de la transmission, un type LBT, le nombre de tentatives échouées, ou la durée de tentatives échouées ; et
un moyen pour déterminer l'échec du protocole LBT pour la transmission à partir de l'UE (104, 404, 504, 702/702', 1050), sur la base du rapport reçu ; et
un moyen pour réaliser, sur la base de la détermination de l'échec du protocole LBT pour la transmission à partir de l'UE (104, 404, 504, 702/702', 1050), un parmi le changement d'une cellule secondaire au niveau de la première station de base (102/180, 402, 502, 750, 1002/1002') pour l'UE (104, 404, 504, 702/702', 1050) pour une communication par l'intermédiaire du spectre de fréquences sans licence, ou le handover de l'UE (104, 404, 504, 702/702', 1050) vers une cellule primaire au niveau d'une seconde station de base pour la communication par l'intermédiaire du spectre de fréquences sans licence.

15. Un programme de calculateur comprenant des instructions qui, lorsque le programme est exécuté par un équipement utilisateur, amènent l'équipement utilisateur à réaliser les étapes du procédé selon l'une des revendications 1 à 10 ou, lorsque le programme est exécuté par une station de base, amènent la station de base à réaliser les étapes du procédé selon la revendication 13.
